(19) Europäisches Patentamt
European Patent Office
Office européen des brevets

(11) **EP 3 745 580 B1**

(12) **EUROPEAN PATENT SPECIFICATION**

(45) Date of publication and mention of the grant of the patent:
**10.05.2023 Bulletin 2023/19**

(21) Application number: **19744102.5**

(22) Date of filing: **15.01.2019**

(51) International Patent Classification (IPC):
*H02M 7/48* *(2007.01)*    *H02P 27/06* *(2006.01)*
*H02M 7/5387* *(2007.01)*    *H02P 27/08* *(2006.01)*

(52) Cooperative Patent Classification (CPC):
**H02P 27/08; H02M 7/53875**

(86) International application number:
**PCT/JP2019/000815**

(87) International publication number:
**WO 2019/146437 (01.08.2019 Gazette 2019/31)**

(54) **INVERTER DEVICE**

UMRICHTERVORRICHTUNG

DISPOSITIF ONDULEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2018 JP 2018010721**
**11.09.2018 JP 2018169641**

(43) Date of publication of application:
**02.12.2020 Bulletin 2020/49**

(73) Proprietor: **Kabushiki Kaisha Toyota Jidoshokki**
**Kariya-shi, Aichi 448-8671 (JP)**

(72) Inventors:
• **YAMANE Kazuki**
  **Kariya-shi, Aichi 448-8671 (JP)**
• **NAWA Masamichi**
  **Kariya-shi, Aichi 448-8671 (JP)**

(74) Representative: **TBK**
**Bavariaring 4-6**
**80336 München (DE)**

(56) References cited:
JP-A- 2008 125 335    JP-A- 2013 215 044
JP-A- 2016 174 490    US-A- 3 363 199

• JUNG SUNGHO ET AL: "Low voltage modulation method in six-step operation of three phase inverter", 2015 9TH INTERNATIONAL CONFERENCE ON POWER ELECTRONICS AND ECCE ASIA (ICPE-ECCE ASIA), KOREAN INSTITUTE OF POWER ELECTRONICS, 1 June 2015 (2015-06-01), pages 605-610, XP033184235, DOI: 10.1109/ICPE.2015.7167846 [retrieved on 2015-07-27]
• ANEESH KUMAR A S ET AL: "Control Strategy to Naturally Balance Hybrid Converter for Variable-Speed Medium-Voltage Drive Applications", IEEE TRANSACTIONS ON INDUSTRIAL ELECTRONICS, IEEE SERVICE CENTER, PISCATAWAY, NJ, USA, vol. 62, no. 2, 1 February 2015 (2015-02-01), pages 866-876, XP011569229, ISSN: 0278-0046, DOI: 10.1109/TIE.2014.2341606 [retrieved on 2015-01-07]

**Description**

TECHNICAL FIELD

The present invention relates to an inverter device.

BACKGROUND ART

The inverter device includes an inverter circuit that has switching elements connected between a negative bus and a positive bus and configuring upper and lower arms of each of U, V, and W-phases. A square wave drive (that is also called one pulse drive) is used to control an output of the inverter circuit. In the square wave drive, pulse patterns of upper arm switching elements of U, V, and W-phases and pulse patterns of lower arm switching elements of U, V, and W-phases are determined on the basis of information of an angle of a rotor. A phase voltage has a following relationship with a pulse pattern of an output of a pair of the upper and lower arm switching elements in the range of an electric angle 0 to $2\pi$ [rad]. While the upper arm switching element of U-phase is ON in the range of the electric angle 0 to $\pi$ [rad], the U-phase voltage is set to +E (E: direct current power source voltage). While the lower arm switching element of U-phase is ON in the range of the electric angle $\pi$ to $2\pi$ [rad], the U-phase voltage is set to -E. Similarly to the pulse pattern of U-phase, pulse patterns of V-phase and W-phase are generated. The pulse patterns of V-phase and W phase are phase-shifted by $\pm 2/3\pi$ [rad] relative to the pulse pattern of the U-phase. Furthermore, in a square wave control, a dead time when both of a high-side switching element and a low-side switching element are OFF is sometime set to be adjustable in order to set a modulation rate of an output voltage of a power conversion circuit to be variable, as disclosed in the Patent Document 1.

Patent Document

Patent Document 1: Japanese Patent Application Publication No. 2012-95412
Further cited prior art can be found in JUNG SUNGHO ET AL: "Low voltage modulation method in six-step operation of three phase inverter", 2015 9TH INTERNATIONAL CONFERENCE ON POWER ELECTRONICS AND ECCE ASIA (ICPE-ECCE ASIA), KOREAN INSTITUTE OF POWER ELECTRONICS, 1 June 2015 (2015-06-01), pages 605-610, XP033184235 as well as in "Width-modulated square-wave pulses for ultrasound applications", IEEE TRANSACTIONS ON ULTRASONICS, FERROELECTRICS AND FREQUENCY CONTROL, IEEE, US, vol. 60, no. 11, 1 November 2013 (2013-11-01), pages 2244-2256, XP011531200 and in US 3 363 199 showing a device for amplitude-modulating a high frequency carrier wave, as well as in ANEESH KUMAR A S ET AL: "Control Strategy to Naturally Balance Hybrid Converter for Variable-Speed Medium-Voltage Drive Applications", IEEE TRANSACTIONS ON INDUSTRIAL ELECTRONICS, IEEE SERVICE CENTER, PISCATAWAY, NJ, USA, vol. 62, no. 2, 1 February 2015 (2015-02-01), pages 866-876.

SUMMARY OF INVENTION

Technical Problem

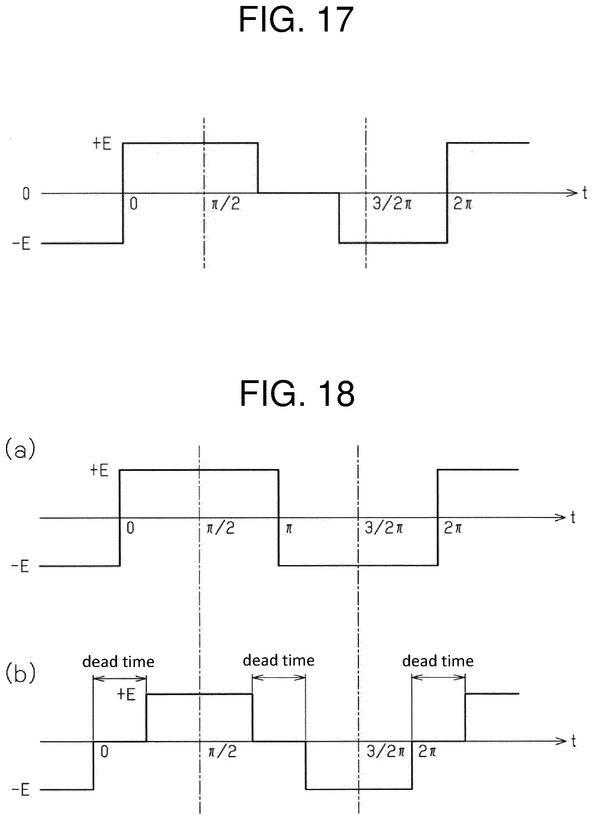

However, in a case where the dead time is designed to be small as illustrated in FIG. 18 at (a) or to be long as illustrated in FIG. 18 at (b), the inverter device has a low follow-up capability to a load fluctuation.
It is an objective of the present invention to provide an inverter device that has a high follow-up capability to a load fluctuation.

Solution to Problem

In the invention, it is provided, an inverter device according to the independent claims.
According to the invention described in any of claims 1 to 3, the signal generator generates the signals having waveforms corresponding to signals of U, V, W-phase command voltages on the basis of the information of the angle, the d-axis command voltage, and the q-axis command voltage. The first calculation unit receives the signals of the d-axis command voltage and the q-axis command voltage, and calculates an effective line voltage. The second calculation unit receives the effective line voltage calculated by the first calculation unit, and generates the modulation voltage every control period. The comparison unit compares the signals having the waveforms corresponding to the signals of the U, V, W-phase command voltages generated by the signal generator with the signals of the modulation voltage generated by the second calculation unit every control period, and outputs signals having pulse patterns which operate the switching elements of the upper arm and the switching element of the lower arm in the inverter circuit. Accordingly, the modulation voltage M is generated by the effective line voltage calculated from the d-axis command voltage and the q-axis command voltage every control period, and compared with the signals of the command voltages every control period. The inverter device has a high follow-up capability to the load fluctuation due to this configuration.

As further described in claim 1, in the inverter device, the signal generator has a d, q/u, v, w transformation unit that performs a coordinate transformation from a two-phase system (d, q) with the d-axis command voltage and the q-axis command voltage to a three-phase system (u, v, w) with the U, V, W-phase command voltages on the basis of the information of the angle, and a scaling unit that scales the signals of the U, V, W-phase command voltages by a phase peak voltage of the U, V, W-phase command voltages having the effective line voltage in a range of -1 to +1. The second calculation unit generates signals of a positive modulation voltage in a range of 0 to 1 and a negative modulation voltage in a range of -1 to 0. The comparison unit compares the signals of U, V, W-phase command voltage scaled by the phase peak voltage of the U, V, W-phase command voltage having the effective line voltage in the range of -1 to +1 with the signals of the positive modulation voltage in the range of 0 to 1 and the negative modulation voltage in the range of -1 to 0, and outputs the signals having the pulse patterns which operate the switching elements of the upper arm and indicate a comparison result of magnitude of the signals of the scaled U, V, W-phase command voltages and the positive modulation voltage in the range of 0 to +1, and the signals having the pulse patterns which operate the switching elements of the lower arm and indicate a comparison result of magnitude of the signals of the scaled U, V, W-phase command voltages and the negative modulation voltage in the range of -1 to 0.

As further described in claim 2, in the inverter device, the signal generator generates signals of the U, V, W-phases each having a waveform of a triangle wave an amplitude of which is 1 on the basis of the information of the angle, the d-axis command voltage, and the q-axis command voltage. The second calculation unit generates signals of a positive modulation voltage in a range of 0 to 1 and a negative modulation voltage in a range of -1 to 0. The comparison unit compares the signals of the generated triangle wave with the signals of the positive modulation voltage in the range of 0 to 1 and the negative modulation voltage in the range of -1 to 0, and outputs the signals having the pulse patterns which operate the switching elements of the upper arm and indicate a comparison result of magnitude of the signals of the generated triangle wave and the positive modulation voltage in the range of 0 to +1, and the signals of the pulse patterns which operate the switching elements of the lower arm and indicate a comparison result of magnitude of the signals of the generated triangle wave and the negative modulation voltage in the range of -1 to 0.

As further described in claim 3, in the inverter device, the signal generator generates signals of the U, V, W-phase each having a waveform of a sine wave an amplitude of which is 1 on the basis of the information of the angle, the d-axis command voltage, and the q-axis command voltage. The second calculation unit generates signals of a positive modulation voltage in a range of 0 to 1 and a negative modulation voltage in a range of -1 to 0. The comparison unit compares the signals of the generated sine wave with the signals of the positive modulation voltage in the range of 0 to 1 and the negative modulation voltage in the range of -1 to 0, and outputs the signals having the pulse patterns which operate the switching elements of the upper arm and indicate a comparison result of magnitude of the signals of the generated sine wave and the positive modulation voltage in the range of 0 to +1, and the signals of the pulse patterns which operate the switching elements of the lower arm and indicate a comparison result of magnitude of the signals of the generated sine wave and the negative modulation voltage in the range of -1 to 0.

As described in claim 4, in the inverter device according to any one of claims 1 to 3, the second calculation unit has an effective line voltage/effective phase voltage calculation unit that calculates the effective phase voltage from the effective line voltage, and a modulation voltage computing unit that computes the modulation voltage M from the effective phase voltage calculated by the effective line voltage/effective phase voltage calculation unit and the DC voltage by using a mathematical expression.

Advantageous Effects of Invention

According to the present invention, the inverter device has a high follow-up capability to a load fluctuation.

BRIEF DESCRIPTION OF DRAWINGS

FIG. 1 is a block diagram showing a configuration of an inverter device according to an embodiment.

FIG. 2 is a block diagram showing a configuration of a d, q/u, v, w transformation circuit according to a first embodiment.

FIG. 3 is a graph showing a relationship between an effective line voltage and a modulation voltage.

FIG. 4 at (a) illustrates a graph showing a comparative operation by a comparator, and FIG. 4 at (b) and (c) illustrates figures showing pulse patterns which operate switching elements.

FIG. 5 at (a) and (b) illustrates figures showing waveforms when a load is constant.

FIG. 6 at (a) and (b) illustrates figures showing waveforms when a load is fluctuated.

FIG. 7 is a block diagram showing a configuration of the d, q/u, v, w transformation circuit according to a second embodiment.

FIG. 8 is a graph showing a relationship between the effective line voltage and the modulation voltage.

FIG. 9 at (a) illustrates a graph showing a comparative operation by the comparator, and FIG. 9 at (b) and (c) illustrates figures showing pulse patterns which operate the switching elements.

FIG. 10 is a block diagram showing a configuration of the d, q/u, v, w transformation circuit according to a third embodiment.

FIG. 11 is a block diagram showing a configuration of the d, q/u, v, w transformation circuit according to a fourth embodiment.

FIG. 12 is a figure showing a waveform to explain the fourth embodiment.

FIG. 13 at (a) and (b) illustrates figures showing waveforms to explain a coefficient of a phase voltage.

FIG. 14 is a block diagram showing a configuration of the d, q/u, v, w transformation circuit according to a fifth embodiment.

FIG. 15 is a figure to explain the fifth embodiment.

FIG. 16 at (a) illustrates a figure showing input waveforms of signals of command voltages, and FIG. 16 at (b) illustrates a figure showing the output waveforms of signals applied to line voltages in accordance with the signals of the command voltages at (a).

FIG. 17 is a figure showing an output waveform of the inverter circuit.

FIG. 18 at (a) and (b) illustrates figures showing output waveforms of an inverter device to explain a technical problem.

DESCRIPTION OF EMBODIMENTS

[First Embodiment]

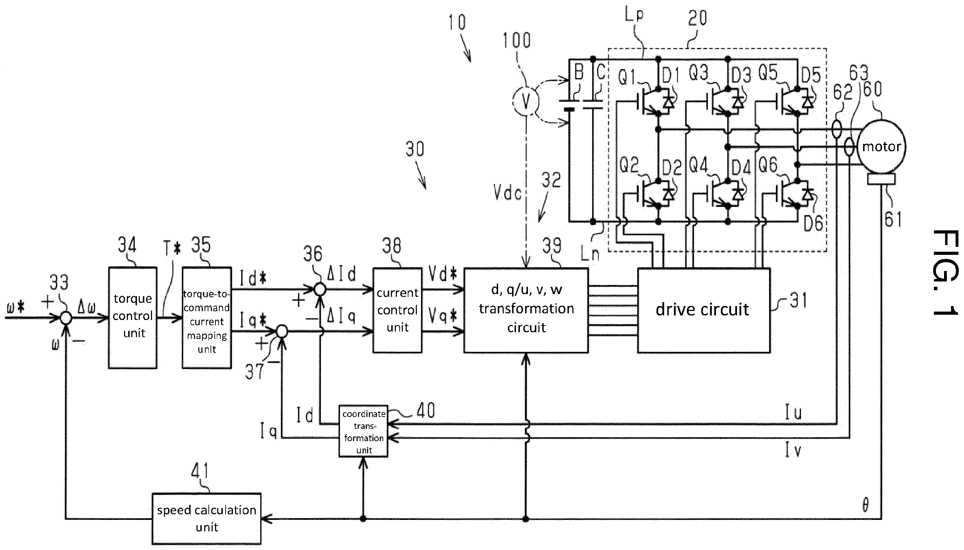

The following will describe an exemplary embodiment according to the present invention with reference to the figures.
Referring to FIG. 1, an inverter device 10 includes an inverter circuit 20 and an inverter control device 30. The inverter control device 30 includes a drive circuit 31 and a controller 32.
The inverter circuit 20 includes six switching elements Q1 to Q6 and six diodes D1 to D6. IGBT is used as the switching elements Q1 to Q6. The switching element Q1 configuring a U-phase upper arm and the switching element Q2 configuring a U-phase lower arm are connected in series between a positive bus Lp and a negative bus Ln. The switching element Q3 configuring a V-phase upper arm and the switching element Q4 configuring a V-phase lower arm are connected in series between the positive bus Lp and the negative bus Ln. The switching element Q5 configuring a W-phase upper arm and the switching element Q6 configuring a W-phase lower arm are connected in series between the positive bus Lp and the negative bus Ln. Each of the switching elements Q1 to Q6 is connected in antiparallel with the corresponding one of diodes D1 to D6. A smoothing capacitor C is connected in parallel with a battery B as a DC power supply across the output terminals of the battery B. The output terminals of the battery B are connected to the positive bus Lp and the negative bus Ln, respectively.
A node between the switching element Q1 and the switching element Q2 is connected to a U-phase terminal of a motor 60. A node between the switching element Q3 and the switching element Q4 is connected to a V-phase terminal of the motor 60. A node between the switching element Q5 and the switching element Q6 is connected to a W-phase terminal of the motor 60. The inverter circuit 20, which has the switching elements Q1 to Q6 configuring the upper and lower arms, converts a DC voltage to an AC voltage by switching operation of the switching elements Q1 to Q6, and supplies the AC voltage to the motor 60, in which the DC voltage is a terminal voltage of the battery B. The driving motor for a vehicle is used as the motor 60.

The drive circuit 31 is connected to gate terminals of the switching elements Q1 to Q6. The drive circuit 31 switches the switching elements Q1 to Q6 of the inverter circuit 20 on and off depending on pulse patterns of control signals.

A position detection unit 61 is provided in the motor 60, and detects an electric angle θ indicating a rotational position of the motor 60. A current sensor 62 detects a U-phase current Iu of the motor 60. In addition, a current sensor 63 detects a V-phase current Iv of the motor 60.

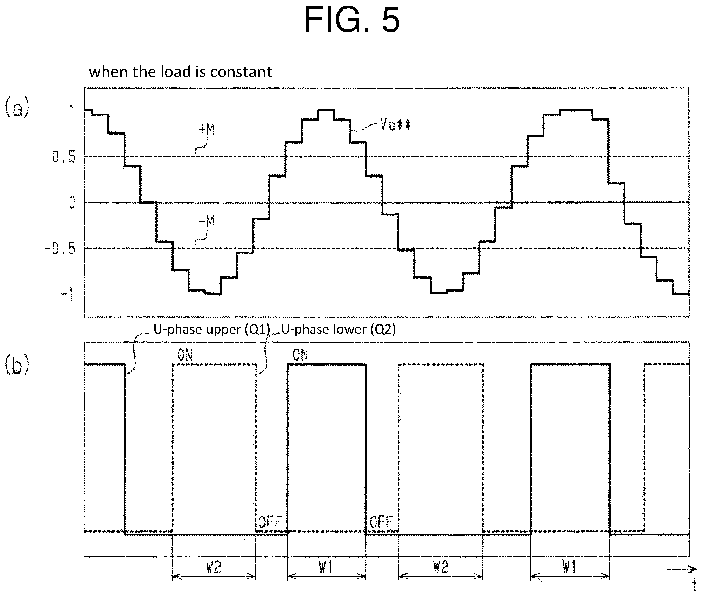

The controller 32 is configured by a microcomputer, and has a subtractor 33, a torque control unit 34, a torque-to-command current mapping unit 35, a subtractor 36, a subtractor 37, a current control unit 38, a d, q/u, v, w transformation circuit 39, a coordinate transformation unit 40, and a speed calculation unit 41. A control period of the controller 32 configured by the microcomputer is a sampling period of the microcomputer which is at most about one tenth one period of signals of command voltages of the U-phase, the V-phase, and the W-phase Vu**, Vv**, Vw** (see FIG. 5 at (a)).

The speed calculation unit 41 calculates a speed ω from the electric angle θ detected by the position detection unit 61. The subtractor 33 calculates a difference Δω between a command speed ω* and the speed ω calculated by the speed calculation unit 41. The torque control unit 34 calculates a command torque T* from the difference Δω of the speed ω.

The torque-to-command current mapping unit 35 receives the signal of the command torque T*, and generates signals of a d-axis command current Id* and a q-axis command current Iq*. For example, the operation of the torque-to-command current mapping unit 35 is performed by using a table in which a target torque previously stored in a storage unit (not shown) is mapped onto the d-axis command current Id* and the q-axis command current Iq*.

The coordinate transformation unit 40 obtains a W-phase current Iw of the motor 60 from the U-phase current Iu and the V-phase current Iv measured by the current sensors 62 and 63, respectively, and performs coordinate transformation from three-phase system (u, v, w) with the U-phase current Iu, the V-phase current Iv, and the W-phase current Iw to two-phase system (d, q) with a d-axis current Id and a q-axis current Iq on the basis of the electric angle θ. It is noted that the d-axis current Id is a current vector component to generate the magnetic flux at the motor 60 and the q-axis current Iq is a current vector component to generate torque at the motor 60.

The subtractor 36 calculates a difference ΔId between the d-axis command current Id* and the d-axis current Id. The subtractor 37 calculates a difference ΔIq between the q-axis command current Iq* and the q-axis current Iq. The current control unit 38 calculates a d-axis command voltage Vd* and a q-axis command voltage Vq* on the basis of the difference ΔId and the difference ΔIq.

The d, q/u, v, w transformation circuit 39 receives the electric angle θ as information of the angle and signals of the d-axis command voltage Vd* and the q-axis command voltage Vq* and outputs signals having pulse patterns to the drive circuit 31 which operate the switching elements Q1 to Q6 of the upper and lower arms of U, V, and W-phases. In other words, the d, q/u, v, w transformation circuit 39 outputs the signals having the pulse patterns which switch the switching elements Q1 to Q6 of the inverter circuit 20 on and off on the basis of the electric angle θ detected by the position detection unit 61 by using the signals of the d-axis command voltage Vd* and the q-axis command voltage Vq*. Therefore, the d, q/u, v, w transformation circuit 39 controls the switching elements Q1 to Q6 provided in a current path of the motor 60 so as to set the values of the d-axis current and q-axis current of the motor 60 to target values on the basis of the U-phase current Iu, the V-phase current Iv, and the W-phase current Iw flowing in the motor 60.

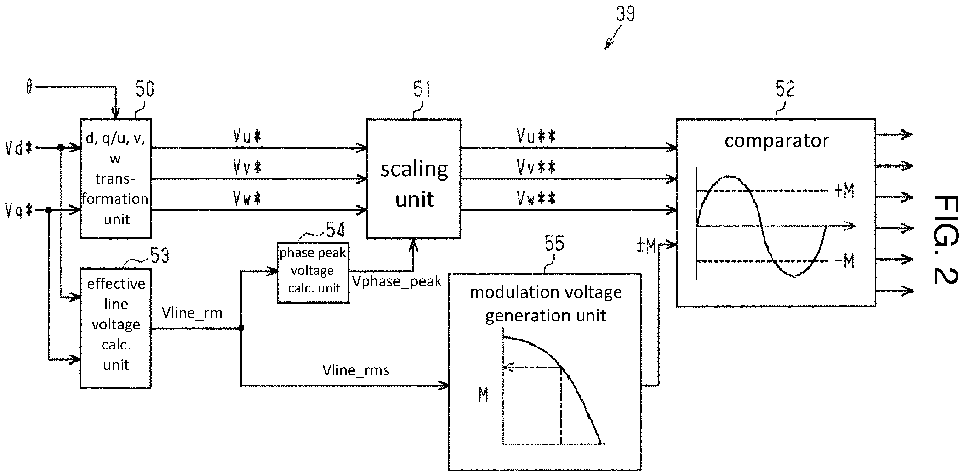

The d, q/u, v, w transformation circuit 39 has a configuration illustrated in FIG. 2. Referring to FIG. 2, the d, q/u, v, w transformation circuit 39 has a d, q/u, v, w transformation unit 50, a scaling unit 51, a comparator 52, an effective line voltage calculation unit 53, a phase peak voltage calculation unit 54, and a modulation voltage generation unit 55.

The d, q/u, v, w transformation unit 50 performs a coordinate transformation from the two-phase system (d, q) with the d-axis command voltage Vd* and the q-axis command voltage Vq* to three-phase system (u, v, w) with the U-phase command voltage Vu*, the V-phase command voltage Vv*, and the W-phase command voltage Vw* on the basis of the electric angle θ as the information of the angle (a position of a rotor).

The effective line voltage calculation unit 53 receives the signals of the d-axis command voltage Vd* and the q-axis command voltage Vq*, and calculates the effective line voltage Vline-rms. In detail, the effective line voltage is calculated by the following equation: Vline-rms = $\sqrt{(Vd^{*2} + Vq^{*2})}$

The phase peak voltage calculation unit 54 calculates a phase peak voltage Vphase-peak of the U-phase, V-phase, and W-phase command voltages having the effective line voltage Vline-rms. In detail, the phase peak voltage Vphase-peak is calculated by the following equation: Vphase-peak = Vline-rms $\times \sqrt{2}/\sqrt{3}$

The scaling unit 51 scales the signals of the U-phase, V-phase, and W-phase command voltages Vu*, Vv*, Vw* by the phase peak voltage Vphase-peak of the U-phase, V-phase, and W-phase command voltages Vu*, Vv*, Vw* having the effective line voltage Vline-rms in the range of -1 to +1. The scaled signals, which are referred as the signals of U-phase, V-phase, and W-phase command voltages Vu**, Vv**, Vw**, are input to the comparator 52.

Thus, the signals having waveforms (sine wave) corresponding to the signals of the U-phase, V-phase, and W-phase command voltages Vu*, Vv*, Vw* are generated on the basis of the electric angle θ, the d-axis command voltage Vd*, and the q-axis command voltage Vq* by the d, q/u, v, w transformation unit 50 and the scaling unit 51 as the signal generator.

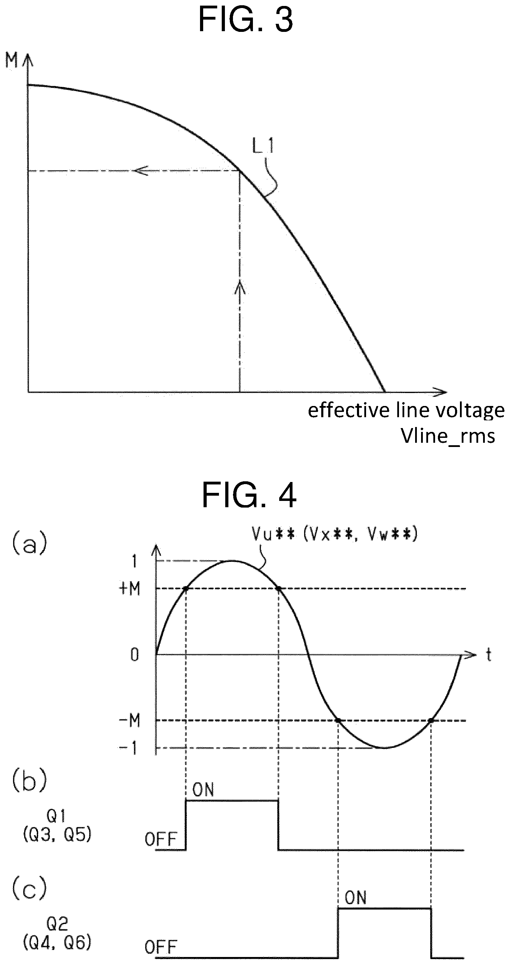

The modulation voltage generation unit 55 receives the effective line voltage Vline-rms calculated by the effective line voltage calculation unit 53, and generates a modulation voltage M by using a characteristic map illustrated in FIG. 3. In FIG. 3, a horizontal axis shows the effective line voltage Vline-rms, and a vertical axis shows the modulation voltage M. A characteristic line L1 is characteristic map data which is calculated in advance. Instead of the characteristic line, table data, an approximate expression, and the like may be used. The modulation voltage M is a component that determines a pulse width of the pulse pattern. Both of a positive modulation voltage +M and a negative modulation voltage -M are input to the comparator 52. In other word, the modulation voltage generation unit 55 generates the positive modulation voltage +M in the range of 0 to 1 and the negative modulation voltage -M in the range of -1 to 0.

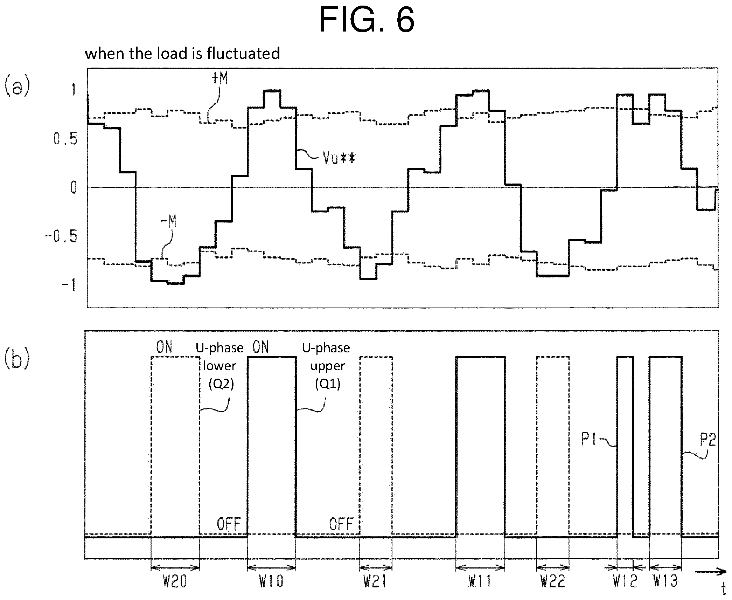

The modulation voltage M is generated every control period which is at most about one tenth one period of the signals of the command voltage of the U-phase, the V-phase, and the W-phase Vu**, Vv**, Vw** (see FIG. 5 at (a) and FIG. 6 at (b)).

The comparator 52 as the comparison unit compares the signals having waveforms (sine wave) corresponding to the signals of the U-phase, V-phase, and W-phase command voltages Vu*, Vv*, Vw* generated by the d, q/u, v, w transformation unit 50 with signals of the modulation voltage M generated by the modulation voltage generation unit 55, as illustrated in FIG. 4. Then, the comparator 52 outputs the signals having pulse patterns which operate the upper arm switching elements Q1, Q3, Q5 and the lower arm switching element Q2, Q4, Q6 in the inverter circuit 20.

In detail, the comparator 52 compares the signal of the U-phase command voltage Vu** scaled by the phase peak voltage Vphase-peak of the U-phase command voltage Vu* having the effective line voltage Vline-rms in the range of -1 to +1 with the signals of the positive modulation voltage +M in the range of 0 to 1 and the negative modulation voltage -M in the range of -1 to 0. Then, the comparator 52 outputs the signal having a pulse pattern which operates the upper arm switching element Q1 and indicates a comparison result of the magnitude of the signals of the scaled U-phase command voltage Vu** and the positive modulation voltage +M in the range of 0 to +1, as illustrated in FIG. 4 at (b). The comparator 52 also outputs the signal having a pulse pattern which operates the lower arm switching element Q2 and indicates a comparison result of the magnitude of the signals of the scaled U-phase command voltage Vu** and the negative modulation voltage -M in the range of -1 to 0, as illustrated in FIG. 4 at (c).

Similarly to the result in U-phase, the comparator 52 compares the signal of the V-phase command voltage Vv** scaled by the phase peak voltage Vphase-peak of the V-phase command voltage Vv* having the effective line voltage Vline-rms in the range of -1 to +1 with the signals of the positive modulation voltage +M in the range of 0 to 1 and the negative modulation voltage -M in the range of -1 to 0. Then, the comparator 52 outputs the signal having a pulse pattern which operates the upper arm switching element Q3 and indicates a comparison result of the magnitude of the signals of the scaled V-phase command voltage Vv** and the positive modulation voltage +M in the range of 0 to +1. The comparator 52 also outputs the signal having a pulse pattern which operates the lower arm switching element Q4 and indicates a comparison result of the magnitude of the signals of the scaled V-phase command voltage Vv** and the negative modulation voltage -M in the range of -1 to 0.

Similarly, the comparator 52 compares the signal of the W-phase command voltage Vw** scaled by the phase peak voltage Vphase-peak of the W-phase command voltage Vw* having the effective line voltage Vline-rms in the range of -1 to +1 with the signals of the positive modulation voltage +M in the range of 0 to 1 and the negative modulation voltage -M in the range of -1 to 0. Then, the comparator 52 outputs the signal having a pulse pattern which operates the upper arm switching element Q5 and indicates a comparison result of the magnitude of the signals of the scaled W-phase command voltage Vw** and the positive modulation voltage +M in the range of 0 to +1. The comparator 52 outputs a pulse pattern which operates the lower arm switching element Q6 and indicates a comparison result of the magnitude of the signals of the scaled W-phase command voltage Vw** and the negative modulation voltage -M in the range of -1 to 0.

In the comparator 52, the comparison of the signals of the command voltages Vu**, Vv**, Vw** and the signals of the modulation voltage ±M is performed every control period which is at most about one tenth one period of the signals of the command voltages of the U-phase, the V-phase, and the W-phase Vu**, Vv**, Vw** (see FIG. 5 at (a) and (b), and FIG. 6 (a) and (b)).

The following will describe an operation of the inverter device 10.

In FIG. 2, inputs of a pulse generation algorithm are the signals of the electric angle θ, the d-axis command voltage Vd*, and the q-axis command voltage Vq*, and outputs of the pulse generation algorithm are the signals having the pulse patterns which operate the upper and lower arm switching elements of the U-phase, the V-phase, and the W-phase.

In Fig. 2, the d, q/u, v, w transformation unit 50 performs a coordinate transformation from the two-phase system (d, q) with the d-axis command voltage Vd* and the q-axis command voltage Vq* to the three-phase system (u, v, w) with the U-phase command voltage Vu*, the V-phase command voltage Vv*, and the W-phase command voltage Vw*. Then, the scaling unit 51 scales the signals of the U-phase, V-phase, and W-phase command voltages Vu*, Vv*, Vw* by the phase peak voltage of the U-phase, the V-phase, and the W-phase. The signals of the U-phase, V-phase, and W-phase command voltages Vu*, Vv*, Vw* are scaled in the range of -1 to +1.

On the other hand, the effective line voltage calculation unit 53 receives the signals of the d-axis command voltage Vd* and the q-axis command voltage Vq*, and calculates the effective line voltage Vline-rms. The modulation voltage generation unit 55 receives the effective line voltage Vline-rms, and generates the modulation voltage M on the basis of the data calculated in advance.

The comparator 52 compares the input signal of the U-phase command voltage Vu** with the signal of the modulation voltage ±M. The pulse pattern which operates the upper arm switching element Q1 is determined by comparison of the signals of the command voltage Vu** and the positive modulation voltage +M. The pulse pattern which operates the lower arm switching element Q2 is determined by comparison of the signals of the command voltage Vu** and the negative modulation voltage -M.

In the V-phase and W-phase, the signals of the V-phase command voltage and the W-phase command voltage, which are phase-shifted by $\pm 2/3\pi$ [rad] relative to the signal of the U-phase command voltage, respectively, are compared with the signal of the modulation voltage ±M.

The following will describe a simulation result of an example in which a pulse width of the pulse pattern is changed with reference to FIG. 5 at (a) and (b), and FIG. 6 at (a) and (b).

FIG. 5 at (a) and (b) shows the case in which the load is constant. FIG. 6 at (a) and (b) shows the case in which the load is fluctuated.

The signal of the U-phase command voltage Vu** and the positive and negative modulation voltage M are illustrated in the FIG. 5 at (a) and FIG. 6 at (a). The pulse patterns which operate the U-phase upper arm switching element Q1 and the U-phase lower arm switching element Q2 are illustrated in FIG. 5 at (b) and FIG. 6 at (b).

In the FIG. 5 at (a) and FIG. 6 at (a), the signal of the U-phase command voltage Vu** in accordance with the d-axis command voltage and the q-axis command voltage is sampled every control period (calculation period), so that the signal is changed stepwise.

As illustrated in FIG. 5 at (a), when the load is constant, the signal of the U-phase command voltage Vu** is substantially a sine wave, and the signals of the modulation voltage M are also constant. Thus, a pulse width W1 of the switching element Q1 and a pulse width W2 of the switching element Q2 are substantially constant, as illustrated in FIG. 5 at (b).

As illustrated in FIG. 6 at (a), when the load is fluctuated, the signal of the U-phase command voltage Vu** is fluctuated in accordance with the load fluctuation. The signal of the modulation voltage M is also fluctuated. Thus, as illustrated in FIG. 6 at (b), the pulse pattern which operates the switching element Q1 is fluctuated, so that the pulse pattern has pulse width W10, W11, W12, W13, and the pulse pattern which operates the switching element Q2 is fluctuated, so that the pulse pattern has pulse width W20, W21, W22. This means that the pulse width is fluctuated in accordance with the load fluctuation. In respect of the pulse width W10, W11, W12, and W13, the split pulse such as the pulses P1 and P2 illustrated in FIG. 6 at (b) may be generated in some cases.

This will be described in detail as follows.

The modulation voltage M is calculated every control period, and the pulse width is controlled each time when the modulation voltage M is calculated so as to output the voltage according to the effective command voltage. In other word, the pulse width is controlled in accordance with the fluctuation of the number of rotations and the torque of a rotor. In this control, the number of pulses generated in one period of the drive current is not necessarily only one as the pulses P1 and P2 illustrated in FIG. 6 at (b).

In one example, as illustrated in FIG. 6 at (a) and (b), the case in which load is fluctuated, that is, the load is suddenly decreased will be described as follows.

A difference between the torque output from the motor and the torque of the load contributes to rotation of the motor. The rotation speed is increased as the difference between the torque output from the motor and the torque of the load is increased. Accordingly, in the present embodiment, the modulation voltage M is calculated by performing the control loop every control period, so that the increase of the number of rotations of the rotor caused by the excess torque that is provided by the decrease of the load is detected, and the smaller command voltage is output so as to decrease the number of rotations. As a result, the pulse may be OFF (on-time may be shortened or zero). Subsequently, the number of rotations is decreased when the command voltage is too small, so that the decrease of the number of rotations is detected, and the large command voltage is output so as to increase the number of rotations. As a result, the pulse may be ON again. Therefore, the number of pulses is not necessarily only one in one period of the drive current. This means that the present embodiment copes with the fluctuation of the number of rotations and the torque of the rotor.

On the other hand, the conventional system in which the one pulse is generated in one period of the drive current does not cope with the fluctuation of the number of rotations and the torque of the rotor as described above.

In a square wave drive, the switching element of each arm is switched on and off only one time in the range of the electric angle 0 to $2\pi$. That is, the inverter device works with low switching frequency in the square wave drive. This may decrease a switching loss, and allows the inverter device to output the maximum voltage. In contrast, it is difficult to control the output voltage. In other word, a feedback control by the simple square wave drive is difficult. This means that a usable range of the inverter device is limited.

The present embodiment allows the square wave drive which minimizes the switching loss to be maintained and regulated. This means that the feedback control in which the electric angle $\theta$, the d-axis voltage command voltage Vd*, and the q-axis voltage command voltage Vq* are returned back to the input is achieved, so that a drive range of the square wave drive is expanded.

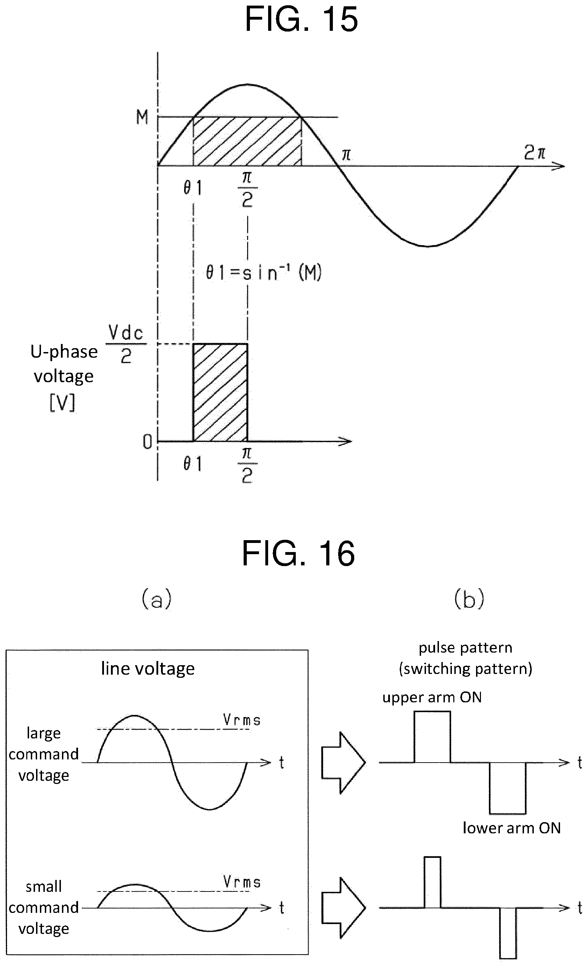

The pulse width illustrated in FIG. 16 at (b) is regulated according to the calculated command voltage (the effective line voltage Vrms) illustrated in FIG. 16 at (a). When the switching is performed by the controlled pulse pattern, a pulse voltage having a bipolar pulse waveform is applied to the line voltage of the motor. That is, the bipolar pulse having an effective line voltage equal to the effective line voltage calculated from the command voltage illustrated in FIG. 16 at (a) is generated. In other word, the command voltage becomes equal to the output voltage. This means that the feedback control may be used. Therefore, in the present embodiment, the command voltages Vu*, Vv*, Vw* are converted into the pulse voltages which have the same effective voltage as that of the command voltages Vu*, Vv*, Vw*, and the signal of the command voltage (sine wave) is used as a carrier signal, so that a pulse drive in which the bipolar pulse including one positive pulse and one negative pulse is generated as a rule regardless of the number of rotations of the rotor is performed, even if the period of the carrier signal is changed in accordance with the number of rotations of the rotor.

As illustrated in FIG. 18 at (a) and (b), an output pulse in the Patent Document 1 is symmetric about the electric angle of $\pi/2$ and $3/2\pi$.

In a case where a pulse width of the output pulse is controlled by a dead time like this, the output pulse has a symmetric pulse pattern, so that the inverter device has the low follow-up capability to the load fluctuation.

In contrast with the case described above, in the present embodiment, the modulation voltage M is generated every control period according to the command voltage, thereby changing the pulse width each time when the modulation voltage M is generated as illustrated in FIG. 17. Although the pulse is sometimes generated in symmetry about the electric angle of $\pi/2$ and $3/2\pi$, the pulse is usually generated in asymmetry about the electric angle of $\pi/2$ and $3/2\pi$. In some cases, the pulse may be split into some pulses, that is, the number of pulses may be increased. Thus, the inverter device of the present embodiment has the high follow-up capability to the load fluctuation.

The embodiment described above provides the following advantages.

(1) The inverter device 10 includes the inverter circuit 20 that has the switching elements Q1 to Q6 connected between the negative bus and the positive bus and configuring the upper arm and the lower arm of each of the U, V, W-phases, and converts the DC voltage to the AC voltage by the switching operation of the switching elements Q1 to Q6 and supplies the AC voltage to the motor. The inverter device 10 includes the d, q/u, v, w transformation unit 50 and the scaling unit 51 as the signal generator. The signal generator (the d, q/u, v, w transformation unit 50 and the scaling unit 51) generates the signals having waveforms (sine wave) corresponding to the signals of the U-phase, V-phase, and W-phase command voltages Vu*, Vv*, Vw* on the basis of the electric angle $\theta$ as the information of the angle, the d-axis command voltage Vd*, and the q-axis command voltage Vq*. The inverter device 10 includes the effective line voltage calculation unit 53 as the first calculation unit that receives the signals of the d-axis command voltage Vd* and the q-axis command voltage Vq*, and calculates the effective line voltage Vline-rms. The inverter device 10 includes the modulation voltage generation unit 55 as the second calculation unit that receives the effective line voltage Vline-rms calculated by the effective line voltage calculation unit 53, and generates the modulation voltage M every control period. The inverter device 10 includes the comparator 52 as the comparison unit that compares the signals having waveforms (sine wave) corresponding to the signals of the U-phase, V-phase, and W-phase command voltages Vu*, Vv*, Vw* generated by the d, q/u, v, w transformation unit 50 and the scaling unit 51 with the signals of the modulation voltage M generated by the modulation voltage generation unit 55 every control period. The comparator 52 as the comparison unit outputs the signals having pulse patterns which operate upper arm switching elements Q1, Q3, Q5 and the lower arm switching elements Q2, Q4, Q6 in the inverter circuit 20.

Accordingly, the modulation voltage M is generated by the effective line voltage Vline-rms calculated from the d-axis command voltage Vd* and the q-axis command voltage Vq* every control period, and compared with the signals of the command voltages Vu*, Vv*, Vw* every control period. The inverter device 10 has a high follow-up capability to the load fluctuation due to this configuration. In other word, the inverter device 10 has the high follow-up capability to the load fluctuation because the modulation voltage M is generated every control period according to the d-axis command voltage Vd* and the q-axis command voltage Vq*.

(2) The signal generator (50, 51) has the d, q/u, v, w transformation unit 50 and the scaling unit 51. The d, q/u, v, w transformation unit 50 performs a coordinate transformation from the two-phase system (d, q) with the d-axis command voltage Vd* and the q-axis command voltage Vq* to three-phase system (u, v, w) with the U-phase, V-phase, W-phase command voltage Vu*, Vv*, Vw* on the basis of the electric angle $\theta$ as the information of the angle. The scaling unit 51 scales the signals of the U-phase, V-phase, and W-phase command voltages Vu*, Vv*, Vw* by the phase peak voltage Vphase-peak of the U-phase, V-phase, and W-phase command voltages Vu*, Vv*, Vw* having the effective line voltage Vline-rms in the range of -1 to +1. The modulation voltage generation unit 55 as the second calculation unit generates the signals of the positive modulation voltage +M in the range of 0 to 1 and the negative modulation voltage -M in the range of -1 to 0. The comparator 52 as the comparison unit compares the signals of the U-phase, V-phase, and W-phase command voltage Vu**, Vv**, Vw** scaled by the phase peak voltage Vphase-peak of the U-phase, V-phase, W-phase command voltage Vu*, Vv*, Vw* having the effective line voltage Vline-rms in the range of -1 to +1 with the signals of the positive modulation voltage +M in the range of 0 to 1 and the negative modulation voltage -M in the range of -1 to 0. Then, the comparator 52 outputs the signals having pulse patterns which operate the upper arm switching elements Q1, Q3, Q5 and indicate a comparison result of the magnitude of the signals of the scaled U-phase, V-phase, and W-phase command voltage Vu**, Vv**, Vw** and the positive modulation voltage +M in the range of 0 to +1. In addition, the comparator 52 outputs the signals having pulse patterns which operate the lower arm switching elements Q2, Q4, Q6 and indicate a comparison result of the magnitude of the signals of the scaled U-phase, V-phase, and W-phase command voltage Vu**, Vv**, Vw** and the negative modulation voltage -M in the range of -1 to 0. This means that the inverter device 10 is a practical device.

[Second embodiment]

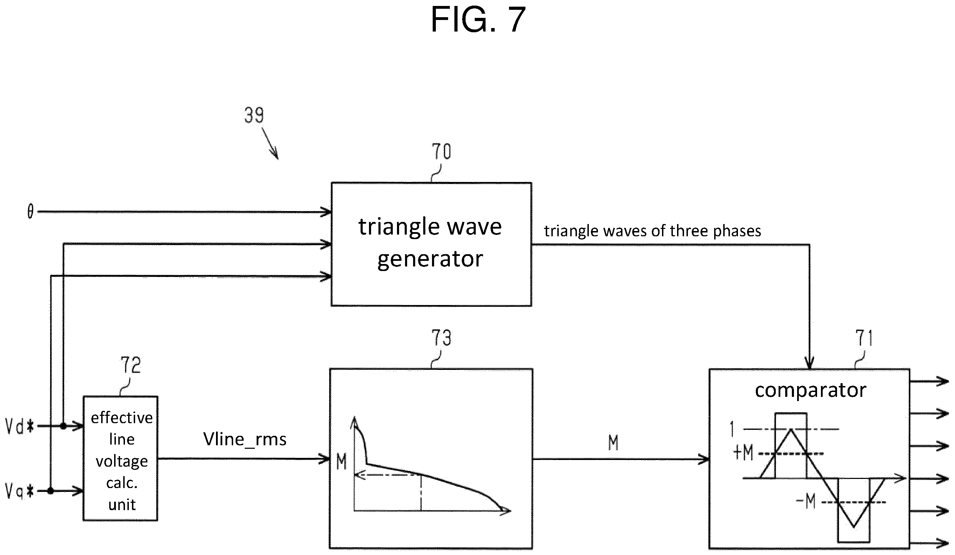

The following will describe a second embodiment while focusing on a difference between the first embodiment and the second embodiment. Instead of FIG. 2, the d, q/u, v, w transformation circuit 39 has a configuration illustrated in FIG. 7.

In FIG. 7, inputs of a pulse generation algorithm are the signals of the electric angle θ as the information of the angle (the position of the rotor), the d-axis command voltage Vd*, and the q-axis command voltage Vq*, and outputs of the pulse generation algorithm are the signals having pulse patterns which operate the upper and lower arm switching elements of the U-phase, the V-phase, and the W-phase.

The d, q/u, v, w transformation circuit 39 of the present embodiment includes a triangle wave generator 70, a comparator 71, an effective line voltage calculation unit 72, and a modulation voltage generation unit 73. The triangle wave generator 70 generates signals of the U-phase, the V-phase, and the W-phase each having a waveform of a triangle wave on the basis of the electric angle θ as an information of an angle, the d-axis command voltage Vd*, and the q-axis command voltage Vq*. A phase of the triangle wave is obtained by the phase difference from the electric angle θ calculated from the electric angle (θ) and a voltage phase angle δ (from the command voltage Vd*, Vq*). An amplitude of the triangle wave is 1. A frequency of the triangle wave is changed in accordance with the number of rotations of the rotor (a ratio of a temporal change in the electric angle θ). The signal of the triangle wave for one cycle is generated in one period of the drive current. The signal of the triangle wave is input to the comparator 71.

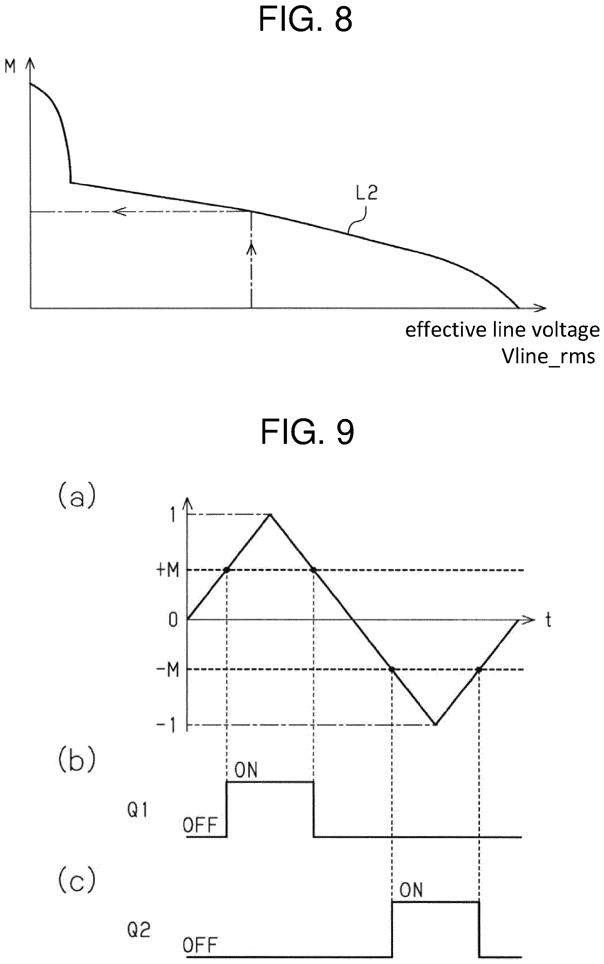

The effective line voltage calculation unit 72 receives the signals of the d-axis command voltage Vd* and the q-axis command voltage Vq*, and calculates the effective line voltage Vline-rms of the motor. In detail, the effective line voltage is calculated by the following equation: Vline-rms = $\sqrt{(Vd^{*2} + Vq^{*2})}$ The modulation voltage generation unit 73 receives the effective line voltage, and generates the modulation voltage M by using a characteristic map illustrated in FIG. 8, that is, data in which the effective line voltage is calculated in advance. In FIG. 8, a horizontal axis shows the effective line voltage Vline-rms, and a vertical axis shows the modulation voltage M. A characteristic line L2 is characteristic map data which is calculated in advance. Instead of the characteristic line, table data, an approximate expression, and the like may be used. The modulation voltage M is a component that determines a pulse width of the pulse pattern. Referring to the FIG. 9 at (a), both of the positive modulation voltage +M and the negative modulation voltage -M are input to the comparator 71.

As illustrated in FIG. 9 at (a), the comparator 71 compares the input signal of the triangle wave with the signal of the modulation voltage ±M. As illustrated in FIG. 9 at (b), the comparator 71 compares the signal of the triangle wave of the U-phase with the signal of the positive modulation voltage +M, and determines the pulse pattern of the upper arm switching element Q1 of the U-phase. In addition, as illustrated in FIG. 9 at (c), the comparator 71 compares the signal of the triangle wave of the U-phase with the signal of the negative modulation voltage -M, and determines the pulse pattern of the lower arm switching element Q2 of the U-phase. Similarly to the pulse pattern of the U-phase, the comparator 71 compares the input signal of the triangle wave of the V-phase with the signal of the modulation voltage ±M. The comparator 71 compares the signal of the triangle wave of the V-phase with the signal of the positive modulation voltage +M, and determines the pulse pattern of the upper arm switching element Q3 of the V-phase. The comparator 71 compares the signal of the triangle wave of the V-phase with the signal of the negative modulation voltage -M, and determines the pulse pattern of the lower arm switching element Q4 of the V-phase. Similarly, the comparator 71 compares the input signal of the triangle wave of the W-phase with the signal of the modulation voltage ±M. The comparator 71 compares the signal of the triangle wave of the W-phase with the signal of the positive modulation voltage +M, and determines the pulse pattern of the upper arm switching element Q5 of the W-phase. The comparator 71 compares the signal of the triangle wave of the W-phase with the signal of the negative modulation voltage -M, and determines the pulse pattern of the lower arm switching element Q6 of the W-phase. Thus, each signal of the triangle waves of the U-phase, the V-phase, and the W-phase is compared with the signal of the modulation voltage ±M because the signals of the triangle waves of the V-phase and the W-phase are phase-shifted by ±2/3π [rad] relative to the signal of the triangle wave of the U-phase, respectively.

Thus, the inverter device 10 includes the inverter circuit 20, the triangle wave generator 70, the effective line voltage calculation unit 72, the modulation voltage generation unit 73, and the comparator 71. The triangle wave generator 70 as the signal generator generates the signals having waveforms (triangle wave) corresponding to the signals of the U-phase, V-phase, and W-phase command voltages on the basis of the electric angle θ as the information of the angle, the d-axis command voltage Vd*, and the q-axis command voltage Vq*. The effective line voltage calculation unit 72 as the first calculation unit receives the signals of the d-axis command voltage Vd* and the q-axis command voltage Vq*, and calculates the effective line voltage Vline-rms of the motor. The modulation voltage generation unit 73 as the second calculation unit receives the effective line voltage Vline-rms calculated by the effective line voltage calculation unit 72, and generates the modulation voltage M every control period. The comparator 71 as the comparison unit compares the signals generated by the triangle wave generator 70 and each having a waveform (triangle wave) corresponding to the signals of the U-phase, V-phase, and W-phase command voltages with the signals of the modulation voltage M generated by the modulation voltage generation unit 73 every control period. The comparator 71 outputs the signals having pulse patterns which operate the upper arm switching elements Q1, Q3, Q5 and the lower arm switching elements Q2, Q4, Q6 in the inverter circuit 20.

In detail, the triangle wave generator 70 as the signal generator generates the signals of the U-phase, the V-phase, and the W-phase each having a waveform of a triangle wave the amplitude of which is 1 on the basis of the electric angle θ as the information of the angle, the d-axis command voltage Vd*, and the q-axis command voltage Vq*. The modulation voltage generation unit 73 as the second calculation unit generates the signals of the positive modulation voltage +M in the range of 0 to 1 and the negative modulation voltage -M in the range of -1 to 0. The comparator 71 as the comparison unit compares the signals of the generated triangle wave with the signals of the positive modulation voltage +M in the range of 0 to 1 and the negative modulation voltage -M in the range of -1 to 0. The comparator 71 outputs the signals having pulse patterns which operate the upper arm switching elements Q1, Q3, Q5 and indicate a comparison result of the magnitude of the signals of the generated triangle wave and the positive modulation voltage +M in the range of 0 to +1. The comparator 71 outputs the signals of pulse patterns which operate the lower arm switching elements Q2, Q4, Q6 and indicate a comparison result of the magnitude of the signals of the generated triangle wave and the negative modulation voltage -M in the range of -1 to 0.

[Third Embodiment]

The following will describe a third embodiment while focusing on a difference between the second embodiment and the third embodiment.

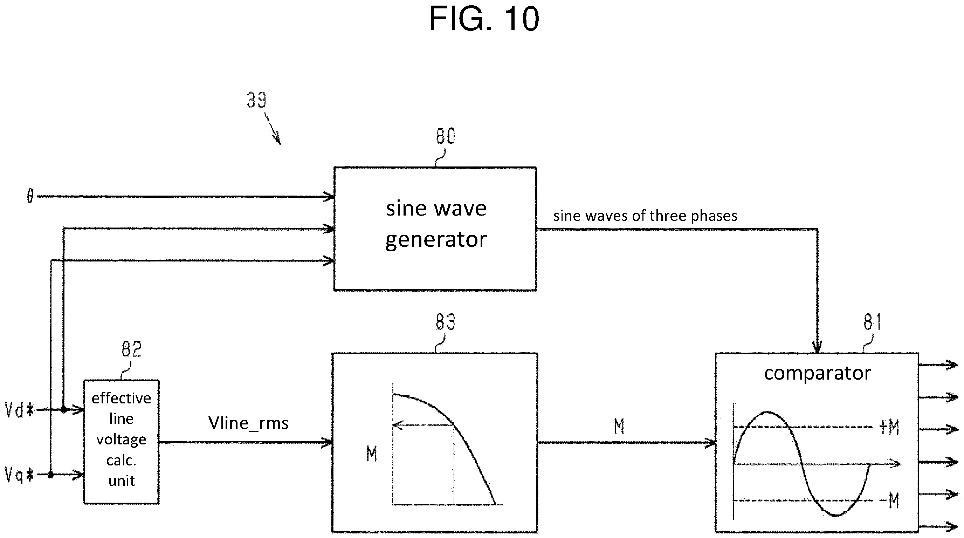

Instead of FIG. 7, the d, q/u, v, w transformation circuit 39 has a configuration illustrated in FIG. 10.

In FIG. 10, inputs of a pulse generation algorithm are the signals of the electric angle θ as the information of the angle (the position of the rotor), the d-axis command voltage Vd*, and the q-axis command voltage Vq*, and outputs of the pulse generation algorithm are the signals having pulse patterns which operate the upper and lower switching elements Q1 to Q6 of the U-phase, the V-phase, and the W-phase.

The d, q/u, v, w transformation circuit 39 of the present embodiment includes a sine wave generator 80, a comparator 81, an effective line voltage calculation unit 82, and a modulation voltage generation unit 83. The sine wave generator 80 generates signals of the U-phase, the V-phase, and the W-phase each having a waveform of a sine wave on the basis of the d-axis command voltage Vd*, the q-axis command voltage Vq*, and the electric angle θ as the information of the angle. A phase of the sine wave is obtained by the phase difference from the electric angle θ calculated from the electric angle (θ) and the voltage phase angle δ (from the command voltage Vd*, Vq*). An amplitude of the sine wave is 1. A frequency of the sine wave is changed in accordance with the number of rotations of the rotor (a ratio of a temporal change in the electric angle θ). The sine wave for one cycle is generated in one period of the drive current. The signal of the sine wave is input to the comparator 81.

The effective line voltage calculation unit 82 receives the signals of the d-axis command voltage Vd* and the q-axis command voltage Vq*, and calculates the effective line voltage Vline-rms of the motor. In detail, the effective line voltage is calculated by the following equation: $V_{line-rms} = \sqrt{(Vd^{*2} + Vq^{*2})}$

The modulation voltage generation unit 83 receives the effective line voltage, and generates the modulation voltage M by using the characteristic map illustrated in FIG. 3, that is, data in which the effective line voltage is calculated in advance. In FIG. 3, a horizontal axis shows the effective line voltage Vline-rms, and a vertical axis shows the modulation voltage M. The characteristic line L1 is characteristic map data which is calculated in advance. Instead of the characteristic line, table data, an approximate expression, and the like may be used. The modulation voltage is a component that determines a pulse width of the pulse pattern. Both of the positive modulation voltage +M and the negative modulation voltage -M are input to the comparator 81.

The comparator 81 compares the input signal of the sine wave with the signal of the modulation voltage ±M. The comparator 81 compares the signal of the sine wave of the U-phase with the signal of the positive modulation voltage +M, and determines the pulse pattern of the upper arm switching element Q1 of the U-phase. In addition, the comparator 81 compares the signal of the sine wave of the U-phase with the signal of the negative modulation voltage -M, and determines the pulse pattern of the lower arm switching element Q2 of the U-phase. Similaily to the pulse pattern of the U-phase, the comparator 81 compares the input signal of the sine wave of the V-phase with the signal of the positive and negative modulation voltage ±M. The comparator 81 compares the signal of the sine wave of the V-phase with the signal of the positive modulation voltage +M, and determines the pulse pattern of the upper arm switching element Q3 of the V-phase. The comparator 81 compares the signal of the sine wave of the V-phase with the signal of the negative modulation voltage -M, and determines the pulse pattern of the lower arm switching element Q4 of the V-phase. Similarly, the comparator 81 compares the input signal of the sine wave of the W-phase with the signal of the modulation voltage ±M. The comparator 81 compares the signal of the sine wave of the W-phase with the signal of the positive modulation voltage +M, and determines the pulse pattern of the upper arm switching element Q5 of the W-phase. The comparator 81 compares the signal of the sine wave of the W-phase with the signal of the negative modulation voltage -M, and determines the pulse pattern of the lower arm switching element Q6 of the W-phase. Thus, each signal of the sine waves of the U-phase, the V-phase, and the W-phase is compared with the signal of the modulation voltage ±M because the signals of the sine waves of the V-phase and the W-phase are phase-shifted by ±2/3π [rad] relative to the signal of the sine wave of the U-phase, respectively.

The sine wave generator 80 as the signal generator generates the signals of the U-phase, the V-phase, and the W-phase each having a waveform of a sine wave the amplitude of which is 1 on the basis of the electric angle θ as the information of the angle, the d-axis command voltage Vd*, and the q-axis command voltage Vq*. The modulation voltage generation unit 83 as the second calculation unit generates the signals of the positive modulation voltage +M in the range of 0 to 1 and the negative modulation voltage -M in the range of -1 to 0. The comparator 81 as the comparison unit compares the signals of the generated sine wave with the signals of the positive modulation voltage +M in the range of 0 to 1 and the negative modulation voltage -M in the range of -1 to 0. The comparator 81 outputs signals having pulse patterns which operate the upper arm switching elements Q1, Q3, Q5 and indicate a comparison result of the magnitude of the signals of the generated sine wave and the positive modulation voltage +M in the range of 0 to +1. The comparator 81 outputs signals having pulse patterns which operate the lower arm switching elements Q2, Q4, Q6 and indicate a comparison result of the magnitude of the signals of the generated sine wave and the negative modulation voltage -M in the range of -1 to 0.

In the present embodiment , the signal of the sine wave input to the comparator 81 is sampled by a clock regardless of the control period (calculation period), so that the signal of more smooth sine wave is output in comparison with that of the first embodiment.

[Fourth embodiment]

The following will describe a fourth embodiment while focusing on a difference between the second embodiment and the fourth embodiment.

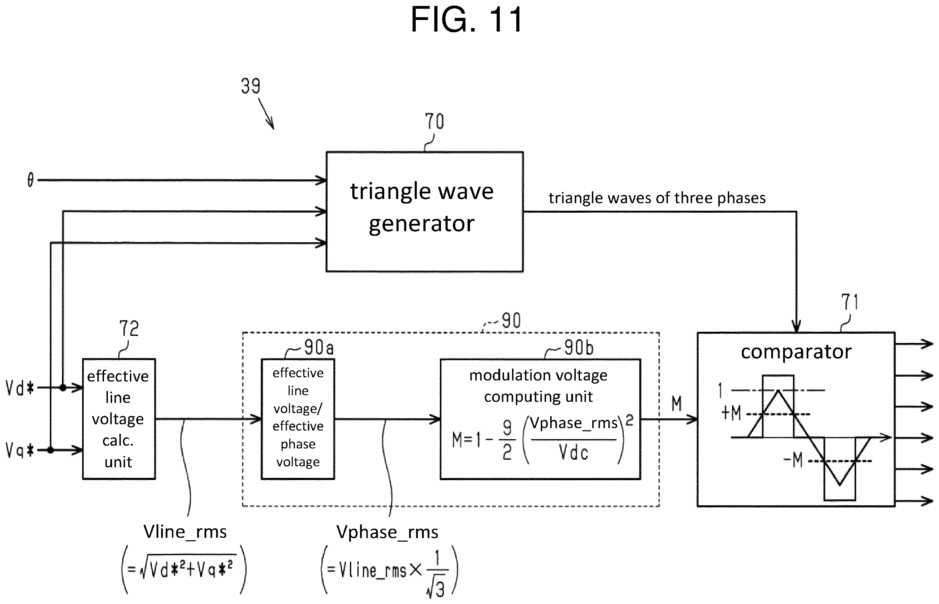

Instead of FIG. 7, the d, q/u, v, w transformation circuit 39 has a configuration illustrated in FIG. 11.

The modulation voltage generation unit 73 illustrated in FIG. 7 uses the map illustrated in FIG. 8. The characteristic line L2 in FIG. 8 is data calculated in advance. Characteristic map data, table data, an approximate expression, and the like are used as the data.

As illustrated in FIG. 11, the d, q/u, v, w transformation circuit 39 of the present embodiment includes the triangle wave generator 70, the comparator 71, the effective line voltage calculation unit 72, and a modulation voltage generation unit 90. The modulation voltage generation unit 90 has an effective line voltage/effective phase voltage calculation unit 90a and a modulation voltage computing unit 90b.

The triangle wave generator 70 generates signals of the U-phase, the V-phase, and the W-phase each having a waveform of a triangle wave on the basis of the electric angle θ as an information of an angle, the d-axis command voltage Vd*, and the q-axis command voltage Vq*. A phase of the triangle wave is obtained by the phase difference from the electric angle θ calculated from the electric angle (θ) and the voltage phase angle δ (from the command voltage Vd*, Vq*). An amplitude of the triangle wave is 1. A frequency of the triangle wave is changed in accordance with the number of rotations of the rotor (a ratio of a temporal change in the electric angle θ). The signal of the triangle wave for one cycle is generated in one period of the drive current. The signal of the triangle wave is input to the comparator 71.

The effective line voltage calculation unit 72 receives the signals of the d-axis command voltage Vd* and the q-axis command voltage Vq*, and calculates the effective line voltage Vline-rms of the motor. In detail, the effective line voltage is calculated by the following equation: $Vline\text{-}rms = \sqrt{(Vd^{*2} + Vq^{*2})}$

The effective line voltage/effective phase voltage calculation unit 90a calculates the effective phase voltage Vphase-rms from the effective line voltage Vline-rms by the following equation (1).
[Equation 1]

$$V_{\text{phase\_rms}} = V_{\text{line\_rms}} \times \frac{1}{\sqrt{3}} \cdots (1)$$

The modulation voltage computing unit 90b computes the modulation voltage M from the effective phase voltage Vphase-rms by the following equation (2).
[Equation 2]

$$M = 1 - \frac{9}{2}\left(\frac{V_{\text{phase\_rms}}}{V_{\text{dc}}}\right)^2 \cdots (2)$$

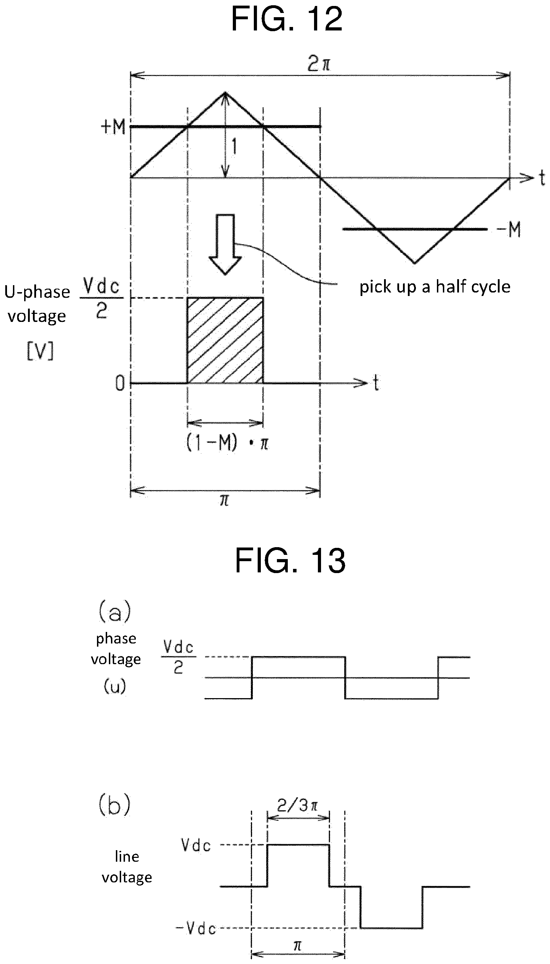

It is noted that a terminal voltage of the battery B (DC voltage) illustrated in FIG. 1, which is referred as Vdc, is detected by a voltage sensor 100 as illustrated by an imaginary line in FIG. 1. The detection result of the terminal voltage of the battery B (DC voltage) is input to the d, q/u, v, w transformation circuit 39.
The equation (2) will be described in detail as follows.
As illustrated in FIG. 12, when a duty cycle of the signal of the phase voltage is 100% in the range of the electric angle 0 to $\pi$, the effective phase voltage is obtained as the following equation (3) (since the upper limit is 0 at M = 0).
[Equation 3]

$$V_{\text{phase\_rms}} = \frac{V_{\text{dc}}}{2} \times \sqrt{(1 - M)} \cdots (3)$$

Here, when the upper limit of the effective line voltage Vline-rms (=V(2/3) Vdc) is taken into consideration from the relationship of three phases, a coefficient in the equation (3) is replaced with a coefficient of the following equation (4).
[Equation 4]

$$V_{\text{phase\_rms}} = \frac{\sqrt{2} \times V_{\text{dc}}}{3} \times \sqrt{(1 - M)} \cdots (4)$$

The equation (4) is transformed into the equation (2).
The following will describe the coefficient of the phase voltage.
In a case considered here, M is set to 0.
As illustrated in FIG. 13 at (a), the signal of the U-phase voltage is in either state of an on-state or an off-state. The signals of the V-phase voltage and W-phase voltage are phase-shifted by $\pm$120 degrees relative to the signal of the U-phase voltage, respectively. The effective phase voltage Vphase-rms is half of the DC voltage Vdc (Vdc/2).
In this case, the line voltage Vline is given as follows (see FIG. 13 at (b)).
The effective line voltage Vline-rms is Vdc V(2/3). The effective phase voltage Vphase-rms is obtained by multiplying a conversion coefficient 1/{V3} by the effective line voltage Vline-rms: Vphase-rms = 1/{>/3}-Vline-rms = V(2)/3 Vdc
When only the phase voltage is considered, the output range of the phase voltage is between 0 to Vdc/2. However, when the effective phase voltage Vphase-rms is calculated from the effective line voltage Vline-rms in the present embodiment, the maximum value of the effective phase voltage Vphase-rms is determined to be V(2)/3 Vdc depending on the effective line voltage Vline-rms. In other word, the equation (2), which indicates the relationship between the modulation voltage M and the effective phase voltage Vphase-rms, is used so as to output the signal of the modulation voltage M = 0 when the effective phase voltage Vphase-rms obtained in order from the command voltage is V(2)/3 Vdc.
The modulation voltage M obtained by the Equation (2) is a component that determines a pulse width. Both of the positive modulation voltage +M and the negative modulation voltage -M are input to the comparator 71.
The comparator 71 compares the input signal of the triangle wave with the signal of the modulation voltage $\pm$M. Then, the comparator 71 compares the signal of the triangle wave of the U-phase with the signal of the positive modulation voltage +M, and determines the pulse pattern of the upper arm switching element Q1 of the U-phase. In addition, the comparator 71 compares the signal of the triangle wave of the U-phase with the signal of the negative modulation voltage -M, and determines the pulse pattern of the lower arm switching element Q2 of the U-phase. Similarly to the pulse pattern of the U-phase, the comparator 71 compares the input signal of the triangle wave of the V-phase with the signal of the modulation voltage ±M. The comparator 71 compares the signal of the triangle wave of the V-phase with the signal of the positive modulation voltage +M, and determines the pulse pattern of the upper arm switching element Q3 of the V-phase. The comparator 71 compares the signal of the triangle wave of the V-phase with the signal of the negative modulation voltage -M, and determines the pulse pattern of the lower arm switching element Q4 of the V-phase. Similarly, the comparator 71 compares the input signal of the triangle wave of the W-phase with the signal of the modulation voltage ±M. The comparator 71 compares the signal of the triangle wave of the W-phase with the signal of the positive modulation voltage +M, and determines the pulse pattern of the upper arm switching element Q5 of the W-phase. The comparator 71 compares the signal of the triangle wave of the W-phase with the signal of the negative modulation voltage -M, and determines the pulse pattern of the lower arm switching element Q6 of the W-phase. Thus, each signal of the triangle waves of the U-phase, the V-phase, and the W-phase is compared with the signal of the modulation voltage ±M because the signals of the triangle waves of the V-phase and the W-phase are phase-shifted by ±2/3π [rad] relative to the signal of the triangle wave of the U-phase, respectively.

In the present embodiment, the modulation voltage generation unit 90 as the second calculation unit includes the effective line voltage/effective phase voltage calculation unit 90a that calculates the effective phase voltage Vphase-rms from the effective line voltage Vline-rms, and the modulation voltage computing unit 90b that computes the modulation voltage M from the effective phase voltage Vphase-rms calculated by the effective line voltage/effective phase voltage calculation unit 90a and the DC voltage Vdc by using the mathematical expression.

Thus, the modulation voltage M is calculated by the computing operation, so that a data storage capacity of table data, characteristic map data, and an approximate expression, that is, a memory capacity may be reduced. In addition, computational load may be reduced. For example, although an interpolation processing is required when the characteristic map is used to obtain the modulation voltage M, the computational load may be reduced by using the mathematical expression.

[Fifth embodiment]

The following will describe a fifth embodiment while focusing on a difference between the third and fourth embodiments and the fifth embodiment.

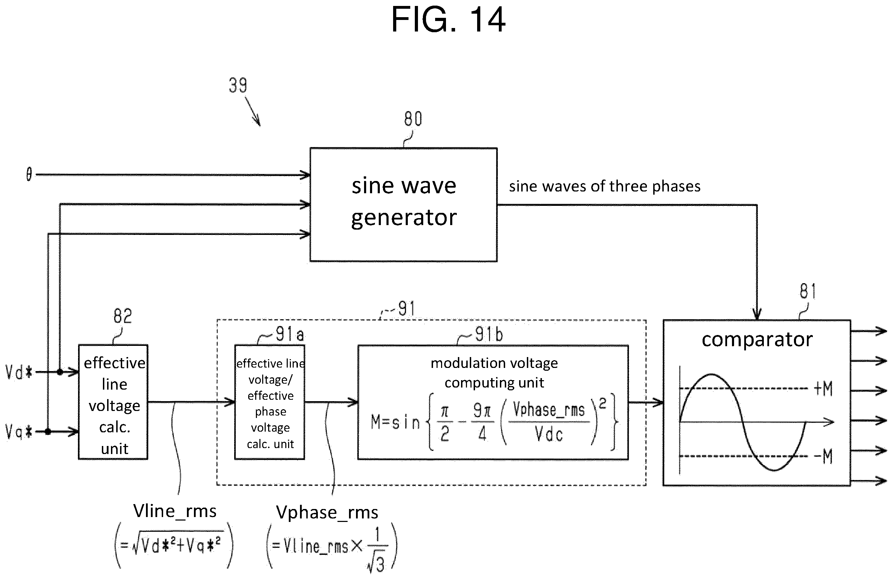

Instead of FIG. 10, the d, q/u, v, w transformation circuit 39 has a configuration illustrated in FIG. 14.

The modulation voltage generation unit 55 illustrated in FIG. 2 uses the characteristic map illustrated in FIG. 3. The characteristic line L1 in FIG. 3 is data calculated in advance. Characteristic map data, table data, an approximate expression, and the like may be used as the data.

In the present embodiment, the modulation voltage generation unit 55 as the second calculation unit in FIG. 2 is replaced with a modulation voltage generation unit 91 illustrated in FIG. 14. The modulation voltage generation unit 91 includes an effective line voltage/effective phase voltage calculation unit 91a and a modulation voltage computing unit 91b.

The effective line voltage/effective phase voltage calculation unit 91a calculates the effective phase voltage Vphase-rms from the effective line voltage Vline-rms by the above-described equation (1).

The modulation voltage computing unit 91b computes the modulation voltage M from the effective phase voltage Vphase-rms by the following equation (5).

[Equation 5]

$$M = \sin\left\{\frac{\pi}{2} - \frac{9\pi}{4}\left(\frac{V_{\text{phase\_rms}}}{V_{\text{dc}}}\right)^2\right\} \cdots (5)$$

It is noted that the terminal voltage of the battery B (DC voltage) illustrated in FIG. 1, which is referred as Vdc, is detected by a voltage sensor 100. The detection result of the terminal voltage of the battery B (DC voltage) is input to the d, q/u, v, w transformation circuit 39.

The equation (5) will be described in detail as follows.

As illustrated in FIG. 15, the pulse width is $\pi/2\text{-}\sin^{-1}(M)$ in the range of the electric angle 0 to $\pi/2$, and $\pi\text{-}2\sin^{-1}(M)$ in the range of the electric angle 0 to $\pi$, so that the effective phase voltage is given as the following equation (6).

[Equation 6]

$$V_{\text{phase\_rms}} = \frac{\sqrt{2} \times V_{\text{dc}}}{3} \frac{\sqrt{\pi - 2 \sin^{-1}(M)}}{\pi} \cdots (6)$$

The equation (6) is transformed into the equation (5).

In the present embodiment, the modulation voltage generation unit 91 as the second calculation unit includes the effective line voltage/effective phase voltage calculation unit 91a that calculates the effective phase voltage Vphase-rms from the effective line voltage Vline-rms, and the modulation voltage computing unit 91b that computes the modulation voltage M from the effective phase voltage Vphase-rms calculated by the effective line voltage/effective phase voltage calculation unit 91a and the DC voltage Vdc by using the mathematical expression.

Thus, the modulation voltage M is calculated by the computing operation, so that a data storage capacity of table data, characteristic map data, and an approximate expression, that is, a memory capacity may be reduced. In addition, computational load may be reduced. For example, although an interpolation processing is required when the characteristic map is used to obtain the modulation voltage M, the computational load may be reduced by using the mathematical expression.

The present invention is not limited to the embodiments described above. For example, the present invention may be embodied as described below.

The DC voltage Vdc in the fourth embodiment and the fifth embodiment is a measured voltage. However, the DC voltage Vdc may be a constant voltage. In other word, the DC voltage Vdc may be a rated voltage (specification voltage) of the battery B.

As illustrated in FIG. 2 of the first embodiment, the modulation voltage generation unit 55 receives the effective line voltage Vline-rms, and generates the modulation voltage M by using the characteristic map. Instead of this configuration, as described in the fourth embodiment and the fifth embodiment, the modulation voltage generation unit as the second calculation unit may include the effective line voltage/effective phase voltage calculation unit that calculates the effective phase voltage Vphase-rms from the effective line voltage Vline-rms, and the modulation voltage computing unit that computes the modulation voltage M from the effective phase voltage Vphase-rms calculated by the effective line voltage/effective phase voltage calculation unit and the DC voltage Vdc by using the mathematical expression.

Thus, the modulation voltage M is calculated by the computing operation, so that a data storage capacity of table data, characteristic map data, and an approximate expression, that is, a memory capacity may be reduced. In addition, computational load may be reduced. For example, although an interpolation processing is required when the characteristic map is used to obtain the modulation voltage M, the computational load may be reduced by using the mathematical expression.

IGBTs are used as the six switching elements Q1 to Q6 of the inverter circuit 20. However, power MOSFETs may be used instead of the IGBTs.

Reference Signs List

10 inverter device
20 inverter circuit
50 d, q/u, v, w transformation unit
51 scaling unit
52 converter
53 effective line voltage calculation unit
54 phase peak voltage calculation unit
55 modulation voltage generation unit
70 triangle wave generator
71 comparator
72 effective line voltage calculation unit
73 modulation voltage generation unit
80 sine wave generator
81 comparator
83 modulation voltage generation unit
90 modulation voltage generation unit
90a effective line voltage/effective phase voltage calculation unit
90b modulation voltage computing unit
91 modulation voltage generation unit

91a effective line voltage/effective phase voltage calculation unit
91b modulation voltage computing unit
Ln negative bus
Lp positive bus
Q1 U-phase upper arm switching element
Q2 U-phase lower arm switching element
Q3 V-phase upper arm switching element
Q4 V-phase lower arm switching element
Q5 W-phase upper arm switching element
Q6 W-phase lower arm switching element
Vd* d-axis command voltage
Vq* q-axis command voltage
Vu** command voltage
Vv** command voltage
Vw** command voltage
Vdc DC voltage
$\theta$ electric angle

**Claims**

1. An inverter device (10) comprising:

an inverter circuit (20) that has switching elements (Q1, Q2, Q3, Q4, Q5, Q6) connected between a negative bus (Ln) and a positive bus (Lp), the inverter circuit (20) being configured to convert a DC voltage (Vdc) to an AC voltage by switching operation of the switching elements (Q1, Q2, Q3, Q4, Q5, Q6) and to supply the AC voltage to a motor (60);
a first calculation unit (53, 72, 82) configured to receive signals of a d-axis command voltage (Vd*) and a q-axis command voltage (Vq*), and calculate an effective line voltage (Vline-rms);
a second calculation unit (55, 73, 83, 90, 91) configured to receive the effective line voltage (Vline-rms) calculated by the first calculation unit (53, 72, 82) and generate a modulation voltage (M) every control period; and
a comparison unit (52, 71, 81) configured to output signals having pulse patterns for operating the switching elements (Q1, Q2, Q3, Q4, Q5, Q6) in the inverter circuit (20),
**characterized by**
a signal generator (50, 51, 70, 80) configured to generate signals having waveforms corresponding to signals of U, V, W-phase command voltages (Vu*, Vv*, Vw*) on the basis of information of an angle ($\theta$), the d-axis command voltage (Vd*), and the q-axis command voltage (Vq*); wherein
the switching elements (Q1, Q2, Q3, Q4, Q5, Q6) configure an upper arm and a lower arm of each of U, V, W-phases;
the comparison unit (52, 71, 81) is configured to compare the signals having the waveforms corresponding to the signals of the U, V, W-phase command voltages (Vu*, Vv*, Vw*) generated by the signal generator (50, 51, 70, 80) with signals of the modulation voltage (M) generated by the second calculation unit (55, 73, 83, 90, 91) every control period and generate, based on the comparison, the outputted signals for operating the switching elements (Q1, Q3, Q5) of the upper arm and the switching element (Q2, Q4, Q6) of the lower arm in the inverter circuit (20);
the signal generator (50, 51) has:

a d, q/u, v, w transformation unit (50) configured to perform a coordinate transformation from a two-phase system (d, q) with the d-axis command voltage (Vd*) and the q-axis command voltage (Vq*) to a three-phase system (u, v, w) with the U, V, W-phase command voltages (Vu*, Vv*, Vw*) on the basis of the information of the angle ($\theta$); and
a scaling unit (51) configured to scale the signals of the U, V, W-phase command voltages (Vu*, Vv*, Vw) by a phase peak voltage (Vphase-peak) of the U, V, W-phase command voltages (Vu*, Vv*, Vw) having the effective line voltage (Vline-rms) in a range of -1 to +1,

the second calculation unit (55) is configured to generate signals of a positive modulation voltage (+M) in a range of 0 to 1 and a negative modulation voltage (-M) in a range of -1 to 0,
the comparison unit (52) is configured to compare the signals of U, V, W-phase command voltage (Vu**, Vv**, Vw**) scaled by the phase peak voltage (Vphase-peak) of the U, V, W-phase command voltage (Vu*, Vv*, Vw*) having the effective line voltage (Vline-rms) in the range of -1 to +1 with the signals of the positive modulation voltage (+M) in the range of 0 to 1 and the negative modulation voltage (-M) in the range of -1 to 0 and to output the signals having the pulse patterns which operate the switching elements (Q1, Q3, Q5) of the upper arm and indicating a comparison result of magnitude of the signals of the scaled U, V, W-phase command voltages (Vu**, Vv**, Vw**) and the positive modulation voltage (+M) in the range of 0 to +1, and the signals having the pulse patterns for operating the switching elements (Q2, Q4, Q6) of the lower arm and indicating a comparison result of magnitude of the signals of the scaled U, V, W-phase command voltages (Vu**, Vv**, Vw**) and the negative modulation voltage (-M) in the range of -1 to 0,

each of the switching elements (Q1, Q3, Q5) of the upper arm is configured to be switched on if the respective one of the U, V, W-phase command voltage (Vu**, Vv**, Vw**) in the range of -1 to +1 is larger than the positive modulation voltage (+M) in the range of 0 to 1 and to be switched off if the respective one of the U, V, W-phase command voltage (Vu**, Vv**, Vw**) in the range of -1 to +1 is smaller than the positive modulation voltage (+M); and

each of the switching elements (Q2, Q4, Q6) of the lower arm is configured to be switched on if the respective one of the U, V, W-phase command voltage (Vu**, Vv**, Vw**) in the range of -1 to +1 is smaller than the negative modulation voltage (-M) in the range of -1 to 0 and to be switched off if the respective one of the U, V, W-phase command voltage (Vu**, Vv**, Vw**) in the range of -1 to +1 is larger than the negative modulation voltage (-M).

2. An inverter device (10) comprising:

an inverter circuit (20) that has switching elements (Q1, Q2, Q3, Q4, Q5, Q6) connected between a negative bus (Ln) and a positive bus (Lp), the inverter circuit (20) being configured to convert a DC voltage (Vdc) to an AC voltage by switching operation of the switching elements (Q1, Q2, Q3, Q4, Q5, Q6) and to supply the AC voltage to a motor (60);
a first calculation unit (53, 72, 82) configured to receive signals of a d-axis command voltage (Vd*) and a q-axis command voltage (Vq*), and calculate an effective line voltage (Vline-rms);
a second calculation unit (55, 73, 83, 90, 91) configured to receive the effective line voltage (Vline-rms) calculated by the first calculation unit (53, 72, 82) and generate a modulation voltage (M) every control period;
a comparison unit (52, 71, 81) configured to output signals having pulse patterns for operating the switching elements (Q1, Q2, Q3, Q4, Q5, Q6) in the inverter circuit (20), and
a signal generator (50, 51, 70, 80) configured to generate signals having waveforms corresponding to signals of U, V, W-phase command voltages (Vu*, Vv*, Vw*) on the basis of information of an angle (θ), the d-axis command voltage (Vd*), and the q-axis command voltage (Vq*); wherein
the switching elements (Q1, Q2, Q3, Q4, Q5, Q6) configure an upper arm and a lower arm of each of U, V, W-phases;
the comparison unit (52, 71, 81) is configured to compare the signals having the waveforms corresponding to the signals of the U, V, W-phase command voltages (Vu*, Vv*, Vw*) generated by the signal generator (50, 51, 70, 80) with signals of the modulation voltage (M) generated by the second calculation unit (55, 73, 83, 90, 91) every control period and generate, based on the comparison, the outputted signals for operating the switching elements (Q1, Q3, Q5) of the upper arm and the switching element (Q2, Q4, Q6) of the lower arm in the inverter circuit (20);
the signal generator (70) is configured to generate the signals of the U, V, W-phases each having a waveform of a triangle wave that varies between -1 and +1 and an amplitude of which is 1 on the basis of the information of the angle (θ), the d-axis command voltage (Vd*), and the q-axis command voltage (Vq*),
the second calculation unit (55) is configured to generate signals of a positive modulation voltage (+M) in a range of 0 to 1 and a negative modulation voltage (-M) in a range of -1 to 0,
the comparison unit (71) is configured to compare the signals of the generated triangle wave with the signals of the positive modulation voltage (+M) in the range of 0 to 1 and the negative modulation voltage (-M) in the range of -1 to 0 and to output the signals having the pulse patterns for operating the switching elements (Q1, Q3, Q5) of the upper arm and indicating a comparison result of magnitude of the signals of the generated triangle wave and the positive modulation voltage (+M) in the range of 0 to +1, and the signals of the pulse patterns for operating the switching elements (Q2, Q4, Q6) of the lower arm and indicating a comparison result of magnitude of the signals of the generated triangle wave and the negative modulation voltage -M in the range of -1 to 0;
**characterized in that**
each of the switching elements (Q1, Q3, Q5) of the upper arm is configured to be switched on if the respective one of the triangle waves is larger than the positive modulation voltage (+M) in the range of 0 to 1 and to be switched off if the respective one of the triangle waves is smaller than the positive modulation voltage (+M); and each of the switching elements (Q2, Q4, Q6) of the lower arm is configured to be switched on if the respective one of the triangle waves is smaller than the negative modulation voltage (-M) in the range of -1 to 0 and to be switched off if the respective one of the triangle waves is larger than the negative modulation voltage (-M).

3. An inverter device (10) comprising:

an inverter circuit (20) that has switching elements (Q1, Q2, Q3, Q4, Q5, Q6) connected between a negative bus (Ln) and a positive bus (Lp), the inverter circuit (20) being configured to convert a DC voltage (Vdc) to an AC voltage by switching operation of the switching elements (Q1, Q2, Q3, Q4, Q5, Q6) and to supply the AC voltage to a motor (60);
a first calculation unit (53, 72, 82) configured to receive signals of a d-axis command voltage (Vd*) and a q-axis command voltage (Vq*), and calculate an effective line voltage (Vline-rms);
a second calculation unit (55, 73, 83, 90, 91) configured to receive the effective line voltage (Vline-rms) calculated by the first calculation unit (53, 72, 82) and generate a modulation voltage (M) every control period;
a comparison unit (52, 71, 81) configured to output signals having pulse patterns for operating the switching elements (Q1, Q2, Q3, Q4, Q5, Q6) in the inverter circuit (20), and
a signal generator (50, 51, 70, 80) configured to generate signals having waveforms corresponding to signals of U, V, W-phase command voltages (Vu*, Vv*, Vw*) on the basis of information of an angle (θ), the d-axis command voltage (Vd*), and the q-axis command voltage (Vq*); wherein
the switching elements (Q1, Q2, Q3, Q4, Q5, Q6) configure an upper arm and a lower arm of each of U, V, W-phases;
the comparison unit (52, 71, 81) is configured to compare the signals having the waveforms corresponding to the signals of the U, V, W-phase command voltages (Vu*, Vv*, Vw*) generated by the signal generator (50, 51, 70, 80) with signals of the modulation voltage (M) generated by the second calculation unit (55, 73, 83, 90, 91) every control period and generate, based on the comparison, the outputted signals for operating the switching elements (Q1, Q3, Q5) of the upper arm and the switching element (Q2, Q4, Q6) of the lower arm in the inverter circuit (20);
the signal generator (80) is configured to generate the signals of the U, V, W-phases each having a waveform of a sine wave an amplitude of which is 1 on the basis of the information of the angle (θ), the d-axis command voltage (Vd*), and the q-axis command voltage (Vq*),
the second calculation unit (55) is configured to generate signals of a positive modulation voltage (+M) in a range of 0 to 1 and a negative modulation voltage (-M) in a range of -1 to 0,
the comparison unit (81) is configured to compare the signals of the generated sine wave with the signals of the positive modulation voltage (+M) in the range of 0 to 1 and the negative modulation voltage (-M) in the range of -1 to 0 and to output the signals having the pulse patterns for operating the switching elements (Q1, Q3, Q5) of the upper arm and indicating a comparison result of magnitude of the signals of the generated sine wave and the positive modulation voltage (+M) in the range of 0 to +1, and the signals of the pulse patterns for operating the switching elements (Q2, Q4, Q6) of the lower arm and indicating a comparison result of magnitude of the signals of the generated sine wave and the negative modulation voltage (-M) in the range of -1 to 0;
**characterized in that**
each of the switching elements (Q1, Q3, Q5) of the upper arm is configured to be switched on if the respective one of the sine waves is larger than the positive modulation voltage (+M) in the range of 0 to 1 and to be switched off if the respective one of the sine waves is smaller than the positive modulation voltage (+M); and
each of the switching elements (Q2, Q4, Q6) of the lower arm is configured to be switched on if the respective one of the sine waves is smaller than the negative modulation voltage (-M) in the range of -1 to 0 and to be switched off if the respective one of the sine waves is larger than the negative modulation voltage (-M).

4. The inverter device (10) according to any one of claims 1 to 3, **characterized in that**
the second calculation unit (90, 91) has:

an effective line voltage/effective phase voltage calculation unit (90a, 91a) configured to calculate the effective phase voltage (Vphase-rms) from the effective line voltage (Vline-rms); and
a modulation voltage computing unit (90b, 91b) configured to compute the modulation voltage M from the effective phase voltage (Vphase-rms) calculated by the effective line voltage/effective phase voltage calculation unit (90a, 90b) and the DC voltage (Vdc) by using a mathematical expression.

**Patentansprüche**

1. Invertereinrichtung (10), die aufweist:

eine Inverterschaltung (20), die Schaltelemente (Q1, Q2, Q3, Q4, Q5, Q6) aufweist, die zwischen einem negative Bus (Ln) und einem positiven Bus (Lp) verbunden sind, wobei die Inverterschaltung (20) konfiguriert ist, eine Gleichspannung (Vdc) in eine Wechselspannung durch einen Schaltbetrieb der Schaltelemente (Q1, Q2, Q3, Q4, Q5, Q6) umzuwandeln und die Wechselspannung einem Motor (60) zuzuführen;
eine erste Berechnungseinheit (53, 72, 82), die konfiguriert ist, Signale einer d-Achsenkommandospannung (Vd*) und einer q-Achsenkommandospannung (Vq*) zu empfangen und eine effektive Leitungsspannung (Vline-rms) zu berechnen;
eine zweite Berechnungseinheit (55, 73, 83, 90, 91), die konfiguriert ist, die effektive Leitungsspannung (Vline-rms), die durch die erste Berechnungseinheit (53, 72, 82) berechnet wird, zu empfangen und eine Modulationsspannung (M) in jeder Steuerungsperiode zu erzeugen; und
eine Vergleichseinheit (52, 71, 81), die konfiguriert ist, Ausgabesignale mit Impulsmustern zum Betreiben der Schaltelemente (Q1, Q2, Q3, Q4, Q5, Q6) in der Inverterschaltung (20) auszugeben,
**gekennzeichnet durch**
einen Signalgenerator (50, 51, 70, 80), der konfiguriert ist, Signale, die Wellenformen, die den Signalen von U-, V-, W-Phasenkommandospannungen (Vu*, Vv*, Vw*) entsprechen, auf der Basis einer Information über einen Winkel (θ), die d-Achsenkommandospannung (Vd*) und die q-Achsenkommandospannung (Vq*) zu erzeugen; wobei
die Schaltelemente (Q1, Q2, Q3, Q4, Q5, Q6) einen oberen Arm und einen unteren Arm von jeder der U-, V-, W-Phasen konfigurieren;
die Vergleichseinheit (52, 71, 81) konfiguriert ist, die Signale, die die Wellenformen entsprechend den Signalen der U-, V-, W-Phasenkommandospannungen (Vu*, Vv*, Vw*) haben, die durch den Signalgenerator (50, 51, 70, 80) erzeugt werden, mit Signalen der Modulationsspannung (M), die durch die zweite Berechnungseinheit (55, 73, 83, 90, 91) erzeugt wird, in jeder Steuerungsperiode zu vergleichen und basierend auf dem Vergleich die ausgegebenen Signale zum Betreiben der Schaltelemente (Q1, Q3, Q5) des oberen Arms und der Schaltelemente (Q2, Q4, Q6) des unteren Arms in der Inverterschaltung (20) zu erzeugen; wobei
der Signalgenerator (50, 51) aufweist:

eine d-, q/u-, v-, w-Transformationseinheit (50), die konfiguriert ist, eine Koordinatentransformation von einem Zweiphasensystem (d, q) mit der d-Achsenkommandospannung (Vd*) und der q-Achsenkommandospannung (Vq*) zu einem Dreiphasensystem (u, v, w) mit den U-, V-, W-Phasenkommandospannungen (Vu*, Vv*, Vw*) auf der Basis der Information über den Winkel (θ) durchzuführen; und
eine Skaliereinheit (51), die konfiguriert ist, die Signale der U-, V-, W-Phasenkommandospannungen (Vu*, Vv*, Vw) durch eine Phasenpeakspannung (Vphase-peak) der U-, V-, W-Phasenkommandospannungen (Vu*, Vv*, Vw*), die die effektive Leitungsspannung (Vline-rms) haben, in einem Bereich von -1 zu +1 zu skalieren,

die zweite Berechnungseinheit (55) konfiguriert ist, Signale einer positiven Modulationsspannung (+M) in einem Bereich von 0 bis 1 und einer negativen Modulationsspannung (-M) in einem Bereich von -1 bis 0 zu erzeugen,
die Vergleichseinheit (52) konfiguriert ist, die Signale der U-, V-, W-Phasenkommandospannung (Vu**, Vv**, Vw**), die mit der Phasenpeakspannung (Vphase-peak) der U-, V-, W-Phasenkommandospannung (Vu*, Vv*, Vw*), die die effektive Leitungsspannung (Vline-rms) haben, in dem Bereich von -1 zu +1 mit den Signalen der positiven Modulationsspannung (+M) in dem Bereich von 0 bis 1 und der negativen Modulationsspannung (-M) in dem Bereich von -1 bis 0 zu vergleichen und die Signale, die die Impulsmuster, die die Schaltelemente (Q1, Q3, Q5) des oberen Arms betreiben und die ein Vergleichsresultat einer Größe der Signale der skalierten U-, V-, W-Phasenkommandospannungen (Vu**, Vv**, Vw**) und der positiven Modulationsspannung (+M) in dem Bereich von 0 bis +1 angeben, und die Signale, die die Impulsmuster zum Betreiben der Schaltelemente (Q2, Q4, Q6) des unteren Arms aufweisen und ein Vergleichsergebnis einer Größe der Signale der skalierten U-, V-, W-Phasenkommandospannungen (Vu**, Vv**, Vw**) und der negativen Modulationsspannung (-M) in dem Bereich von -1 bis 0 angeben, auszugeben,
jedes der Schaltelemente (Q1, Q3, Q5) des oberen Arms konfiguriert ist, eingeschaltet zu werden, wenn die jeweilige der U-, V-, W-Phasenkommandospannung (Vu**, Vv**, Vw**) in dem Bereich von -1 bis +1 größer als die positive Modulationsspannung (+M) in dem Bereich von 0 bis 1 ist, und ausgeschaltet zu werden, wenn die jeweilige der U-, V-, W-Phasenkommandospannungen (Vu**, Vv**, Vw**) in dem Bereich von -1 bis +1 kleiner als die positive Modulationsspannung (+M) ist; und

jedes der Schaltelemente (Q2, Q4, Q6) des unteren Arms konfiguriert ist, eingeschaltet zu werden, wenn die jeweilige der U-, V-, W-Phasenkommandospannung (Vu**, Vv**, Vw**) in dem Bereich von -1 bis +1 kleiner als die negative Modulationsspannung (-M) in dem Bereich von - 1 bis 0 ist, und ausgeschaltet zu werden, wenn die jeweilige der U-, V-, W-Phasenkommandospannung (Vu**, Vv**, Vw**) in dem Bereich von -1 bis +1 größer als die negative Modulationsspannung (-M) ist.

2. Invertereinrichtung (10), die aufweist:

eine Inverterschaltung (20), die Schaltelemente (Q1, Q2, Q3, Q4, Q5, Q6), die zwischen einem negativen Bus (Ln) und einem positiven Bus (Lp) verbunden sind, aufweist, wobei die Inverterschaltung (20) konfiguriert ist, eine Gleichspannung (Vdc) in eine Wechselspannung durch einen Schaltbetrieb der Schaltelemente (Q1, Q2, Q3, Q4, Q5, Q6) umzuwandeln und die Wechselspannung einem Motor (60) zuzuführen;

eine erste Berechnungseinheit (53, 72, 82), die konfiguriert ist, Signale einer d-Achsenkommandospannung (Vd*) und einer q-Achsenkommandospannung (Vq*) zu empfangen und eine effektive Leitungsspannung (Vline-rms) zu berechnen;

eine zweite Berechnungseinheit (55, 73, 83, 90, 91), die konfiguriert ist, die effektive Leitungsspannung (Vline-rms), die durch die erste Berechnungseinheit (53, 72, 82) berechnet wurde, zu empfangen und eine Modulationsspannung (M) in jeder Steuerungsperiode zu erzeugen;

eine Vergleichseinheit (52, 71, 81), die konfiguriert ist, Signale, die Impulsmuster zum Betreiben der Schaltelemente (Q1, Q2, Q3, Q4, Q5, Q6) in der Inverterschaltung (20) aufweisen, auszugeben, und

einen Signalgenerator (50, 51, 70, 80), der konfiguriert ist, Signale zu erzeugen, die Wellenformen entsprechend den Signalen der U-, V-, W-Phasenkommandospannungen (Vu*, Vv*, Vw*) auf der Basis einer Information über einen Winkel ($\theta$), der d-Achsenkommandospannung (Vd*) und der q-Achsenkommandospannung (Vq*) zu erzeugen; wobei

die Schaltelemente (Q1, Q2, Q3, Q4, Q5, Q6) einen oberen Arm und einen unteren Arm von jeder der U-, V-, W-Phasen konfigurieren;

die Vergleichseinheit (52, 71, 81) konfiguriert ist, die Signale, die die Wellenformen entsprechend den Signalen der U-, V-, W-Phasenkommandospannungen (Vu*, Vv*, Vw*), die durch den Signalgenerator (50, 51, 70, 80) erzeugt werden, mit Signalen der Modulationsspannung (M), die durch die zweite Berechnungseinheit (55, 73, 83, 90, 91) in jeder Steuerungsperiode erzeugt wird, zu vergleichen und basierend auf dem Vergleich die ausgegebenen Signale zum Betreiben der Schaltelemente (Q1, Q3, Q5) des oberen Arms und der Schaltelemente (Q2, Q4, Q6) des unteren Arms in der Inverterschaltung (20) zu erzeugen;

der Signalgenerator (70) konfiguriert ist, die Signale der U-, V-, W-Phasen, die jeweils eine Wellenform einer Dreieckswelle, die zwischen -1 und + 1 variiert und deren Amplitude (1) ist, auf der Basis der Information über den Winkel ($\theta$), der d-Achsenkommandospannung (Vd*) und der q-Achsenkommandospannung (Vq*) zu erzeugen,

die zweite Berechnungseinheit (55) konfiguriert ist, Signale einer positiven Modulationsspannung (+M) in einem Bereich von 0 bis 1 und einer negativen Modulationsspannung (-M) in einem Bereich von -1 bis 0 zu erzeugen,

die Vergleichseinheit (71) konfiguriert ist, die Signale der erzeugten Dreieckswelle mit den Signalen der positiven Modulationsspannung (+M) in dem Bereich von 0 bis 1 und der negativen Modulationsspannung (-M) in dem Bereich von -1 bis 0 zu vergleichen und die Signale die die Impulsmuster zum Betreiben der Schaltelemente (Q1, Q3, Q5) des oberen Arms haben und ein Vergleichsergebnis einer Größe der Signale der erzeugten Dreieckswelle und der positiven Modulationsspannung (+M) in dem Bereich von 0 bis +1 angeben, und die Signale der Impulsmuster zum Betreiben der Schaltelemente (Q2, Q4, Q6) des unteren Arms, die ein Vergleichsergebnis einer Größe der Signale der erzeugten Dreieckswelle und der negativen Modulationsspannung (-M) in dem Bereich von -1 bis 0 angeben, auszugeben;

**dadurch gekennzeichnet, dass**

jedes der Schaltelemente (Q1, Q3, Q5) des oberen Arms konfiguriert ist, eingeschaltet zu werden, wenn die jeweilige der Dreieckswellen größer als die positive Modulationsspannung (+M) in dem Bereich von 0 bis 1 ist, und ausgeschaltet zu werden, wenn die jeweilige der Dreieckswellen kleiner als die positive Modulationsspannung (+M) ist; und

jedes der Schaltelemente (Q2, Q4, Q6) des unteren Arms konfiguriert ist, eingeschaltet zu werden wenn die jeweilige der Dreieckswellen kleiner als die negative Modulationsspannung (-M) in dem Bereich von -1 bis 0 ist, und ausgeschaltet zu werden, wenn die jeweilige der Dreieckswellen größer als die negative Modulationsspannung (-M) ist.

3. Invertereinrichtung (10), die aufweist:

eine Inverterschaltung (20), die Schaltelemente (Q1, Q2, Q3, Q4, Q5, Q6), die zwischen einem negativen Bus (Ln) und einem positiven Bus (Lp) verbunden sind, aufweist, wobei die Inverterschaltung (20) konfiguriert ist, eine Gleichspannung (Vdc) in eine Wechselspannung durch einen Schaltbetrieb der Schaltelemente (Q1, Q2, Q3, Q4, Q5, Q6) umzuwandeln und die Wechselspannung einem Motor (60) zuzuführen;

eine erste Berechnungseinheit (53, 72, 82), die konfiguriert ist, Signale einer d-Achsenkommandospannung (Vd*) und einer q-Achsenkommandospannung (Vq*) zu empfangen und eine effektive Leitungsspannung (Vline-rms) zu berechnen;

eine zweite Berechnungseinheit (55, 73, 83, 90, 91), die konfiguriert ist, die effektive Leitungsspannung (Vline-rms), die durch die erste Berechnungseinheit (53, 72, 82) berechnet wird, zu empfangen und eine Modulationsspannung (M) in jeder Steuerungsperiode zu erzeugen;

eine Vergleichseinheit (52, 71, 81), die konfiguriert ist, Signale, die Impulsmuster zum Betreiben der Schaltelemente (Q1, Q2, Q3, Q4, Q5, Q6) in der Inverterschaltung (20) aufweisen, auszugeben, und

einen Signalgenerator (50, 51, 70, 80), der konfiguriert ist, Signale, die Wellenformen entsprechend den Signalen der U-, V-, W-Phasenkommandospannungen (Vu*, Vv*, Vw*) auf der Basis einer Information über einen Winkel (θ), der d-Achsenkommandospannung (Vd*) und der q-Achsenkommandospannung (Vq*) zu erzeugen; wobei die Schaltelemente (Q1, Q2, Q3, Q4, Q5, Q6) einen oberen Arm und einen unteren Arm von jeder der U-, V-, W-Phasen konfigurieren;

die Vergleichseinheit (52, 71, 81) konfiguriert ist, die Signale, die die Wellenformen entsprechend den Signalen der U-, V-, W-Phasenkommandospannungen (Vu*, Vv*, Vw*), die durch den Signalgenerator (50, 51, 70, 80) erzeugt werden, mit Signalen der Modulationsspannung (M), die durch die zweite Berechnungseinheit (55, 73, 83, 90, 91) in jeder Steuerungsperiode erzeugt werden, zu vergleichen und basierend auf dem Vergleich die ausgegebenen Signale zum Betreiben der Schaltelemente (Q1, Q3, Q5) des oberen Arms und der Schaltelemente (Q2, Q4, Q6) des unteren Arms in der Inverterschaltung (20) zu erzeugen;

der Signalgenerator (80) konfiguriert ist, die Signale der U-, V-, W-Phasen, die jeweils eine Wellenform einer Sinuswelle mit einer Amplitude von 1 haben, auf der Basis der Information über den Winkel (θ), der d-Achsenkommandospannung (Vd*) und der q-Achsenkommandospannung (Vq*) zu erzeugen,

die zweite Berechnungseinheit (55) konfiguriert ist, Signale einer positiven Modulationsspannung (+M) in einem Bereich von 0 bis 1 und einer negativen Modulationsspannung (-M) in einem Bereich von -1 bis 0 zu erzeugen;

die Vergleichseinheit (81) konfiguriert ist, die Signale der erzeugten Sinuswelle mit den Signalen der positiven Modulationsspannung (+M) in dem Bereich von 0 bis 1 und der negativen Modulationsspannung (-M) in dem Bereich von -1 bis 0 zu vergleichen, und die Signale, die die Impulsmuster zum Betreiben der Schaltelemente (Q1, Q3, Q5) des oberen Arms aufweisen und ein Vergleichsergebnis einer Größe der Signale der erzeugten Sinuswelle und der positiven Modulationsspannung (+M) in dem Bereich von 0 bis +1 angeben, und die Signale der Impulsmuster zum Betreiben der Schaltelemente (Q2, Q4, Q6) des unteren Arms, die ein Vergleichsergebnis der Größe der Signale der erzeugten Sinuswelle und der negativen Modulationsspannung (-M) in dem Bereich von -1 bis 0 angeben, auszugeben;

**dadurch gekennzeichnet, dass**

jedes der Schaltelemente (Q1, Q3, Q5) des oberen Arms konfiguriert ist, eingeschaltet zu werden, wenn die jeweilige der Sinuswellen größer als die positive Modulationsspannung (+M) in dem Bereich von 0 bis 1 ist, und ausgeschaltet zu werden, wenn die jeweilige der Sinuswellen kleiner als die positive Modulationsspannung (+M) ist; und

jedes der Schaltelemente (Q2, Q4, Q6) des unteren Arms konfiguriert ist, eingeschaltet zu werden, wenn die jeweilige der Sinuswellen kleiner als die negative Modulationsspannung (-M) in dem Bereich von -1 bis 0 ist, und ausgeschaltet zu werden, wenn die jeweilige der Sinuswellen größer als die negative Modulationsspannung (-M) ist.

4. Invertereinrichtung (10) nach einem der Ansprüche 1 bis 3, **dadurch gekennzeichnet, dass** die zweite Berechnungseinheit (90, 91) aufweist:

eine effektive Leitungsspannung-/effektive Phasenspannungsberechnungseinheit (90a, 91a), die konfiguriert ist, die effektive Phasenspannung (Vphase-rms) aus der effektiven Leitungsspannung (Vline-rms) zu berechnen; und

eine Modulationsspannungsberechnungseinheit (90b, 91b), die konfiguriert ist, die Modulationsspannung M aus der effektiven Phasenspannung (Vphase-rms), die durch die effektive Leitungsspannung-/effektive Phasenspannungsberechnungseinheit (90a, 90b) berechnet wird und der Gleichspannung (Vdc) unter Verwendung eines mathematischen Ausdrucks zu berechnen.

**Revendications**

1. Dispositif onduleur (10) comprenant :

un circuit onduleur (20) qui présente des éléments de commutation (Q1, Q2, Q3, Q4, Q5, Q6) connectés entre un bus négatif (Ln) et un bus positif (Lp), le circuit onduleur (20) étant configuré pour convertir une tension CC (Vdc) en une tension CA par opération de commutation des éléments de commutation (Q1, Q2, Q3, Q4, Q5, Q6) et pour fournir la tension CA à un moteur (60) ;
une première unité de calcul (53, 72, 82) configurée pour recevoir des signaux d'une tension de commande d'axe d (Vd*) et d'une tension de commande d'axe q (Vq*), et calculer une tension de ligne efficace (Vline-rms) ;
une deuxième unité de calcul (55, 73, 83, 90, 91) configurée pour recevoir la tension de ligne efficace (Vline-rms) calculée par la première unité de calcul (53, 72, 82) et générer une tension de modulation (M) à chaque période de commande ; et
une unité de comparaison (52, 71, 81) configurée pour délivrer des signaux ayant des motifs d'impulsion pour faire fonctionner les éléments de commutation (Q1, Q2, Q3, Q4, Q5, Q6) dans le circuit onduleur (20),
**caractérisé par**
un générateur de signal (50, 51, 70, 80) configuré pour générer des signaux ayant des formes d'onde correspondant à des signaux de tensions de commande de phases U, V, W (Vu*, Vv*, Vw*) sur la base d'informations d'un angle (θ), de la tension de commande d'axe d (Vd*), et de la tension de commande d'axe q (Vq*) ;
les éléments de commutation (Q1, Q2, Q3, Q4, Q5, Q6) configurant une branche supérieure et une branche inférieure de chacune de phases U, V, W ;
l'unité de comparaison (52, 71, 81) étant configurée pour comparer les signaux ayant les formes d'onde correspondant aux signaux des tensions de commande de phases U, V, W (Vu*, Vv*, Vw*) générés par le générateur de signal (50, 51, 70, 80) avec des signaux de la tension de modulation (M) générée par la deuxième unité de calcul (55, 73, 83, 90, 91) à chaque période de commande et générer, sur la base de la comparaison, les signaux délivrés pour faire fonctionner les éléments de commutation (Q1, Q3, Q5) de la branche supérieure et les éléments de commutation (Q2, Q4, Q6) de la branche inférieure dans le circuit onduleur (20) ;
le générateur de signal (50, 51) ayant :

une unité de transformation a, d, q/u, v, w (50) configurée pour réaliser une transformation de coordonnées d'un système à deux axes (d, q) avec la tension de commande d'axe d (Vd*) et la tension de commande d'axe q (Vq*) à un système à trois axes (u, v, w) avec les tensions de commande de phases U, V, W (Vu*, Vv*, Vw*) sur la base des informations de l'angle (θ) ; et
une unité de mise à l'échelle (51) configurée pour mettre à l'échelle les signaux des tensions de commande de phases U, V, W (Vu*, Vv*, Vw) par une tension de crête de phase (Vphase-peak) des tensions de commande de phases U, V, W (Vu*, Vv*, Vw) ayant la tension de ligne efficace (Vline-rms) dans un intervalle de -1 à +1,
la deuxième unité de calcul (55) étant configurée pour générer des signaux d'une tension de modulation positive (+M) dans un intervalle de 0 à 1 et d'une tension de modulation négative (-M) dans un intervalle de -1 à 0,
l'unité de comparaison (52) étant configurée pour comparer les signaux de tension de commande de phases U, V, W (Vu**, Vv**, Vw**) mis à l'échelle par la tension de crête de phase (Vphase-peak) de la tension de commande de phases U, V, W (Vu*, Vv*, Vw*) ayant la tension de ligne efficace (Vline-rms) dans l'intervalle de -1 à +1 avec les signaux de la tension de modulation positive (+M) dans l'intervalle de 0 à 1 et de la tension de modulation négative (-M) dans l'intervalle de -1 à 0 et pour délivrer les signaux ayant les motifs d'impulsion qui font fonctionner les éléments de commutation (Q1, Q3, Q5) de la branche supérieure et indiquant un résultat de comparaison de grandeur des signaux des tensions de commande de phases U, V, W mises à l'échelle (Vu**, Vv**, Vw**) et de la tension de modulation positive (+M) dans l'intervalle de 0 à +1, et les signaux ayant les motifs d'impulsion pour faire fonctionner les éléments de commutation (Q2, Q4, Q6) de la branche inférieure et indiquant un résultat de comparaison de grandeur des signaux des tensions de commande de phases U, V, W mises à l'échelle (Vu**, Vv**, Vw**) et de la tension de modulation négative (-M) dans l'intervalle de -1 à 0,
chacun des éléments de commutation (Q1, Q3, Q5) de la branche supérieure étant configuré pour être fermé si la tension respective de la tension de commande de phases U, V, W (Vu**, Vv**, Vw**) dans l'intervalle de -1 à +1 est supérieure à la tension de modulation positive (+M) dans l'intervalle de 0 à 1 et pour être ouvert si la tension respective de la tension de commande de phases U, V, W (Vu**, Vv**, Vw**) dans l'intervalle de -1 à +1 est inférieure à la tension de modulation positive (+M) ; et
chacun des éléments de commutation (Q2, Q4, Q6) de la branche inférieure étant configuré pour être fermé si la tension respective de la tension de commande de phases U, V, W (Vu**, Vv**, Vw**) dans l'intervalle de -1 à +1 est inférieure à la tension de modulation négative (-M) dans l'intervalle de -1 à 0 et pour être ouvert si la tension respective de la tension de commande de phases U, V, W (Vu**, Vv**, Vw**) dans l'intervalle de -1 à +1 est supérieure à la tension de modulation négative (-M).

2. Dispositif onduleur (10) comprenant :

un circuit onduleur (20) qui présente des éléments de commutation (Q1, Q2, Q3, Q4, Q5, Q6) connectés entre un bus négatif (Ln) et un bus positif (Lp), le circuit onduleur (20) étant configuré pour convertir une tension CC (Vdc) en une tension CA par opération de commutation des éléments de commutation (Q1, Q2, Q3, Q4, Q5, Q6) et pour fournir la tension CA à un moteur (60) ;

une première unité de calcul (53, 72, 82) configurée pour recevoir des signaux d'une tension de commande d'axe d (Vd*) et d'une tension de commande d'axe q (Vq*), et calculer une tension de ligne efficace (Vline-rms) ;

une deuxième unité de calcul (55, 73, 83, 90, 91) configurée pour recevoir la tension de ligne efficace (Vline-rms) calculée par la première unité de calcul (53, 72, 82) et générer une tension de modulation (M) à chaque période de commande ; et

une unité de comparaison (52, 71, 81) configurée pour délivrer des signaux ayant des motifs d'impulsion pour faire fonctionner les éléments de commutation (Q1, Q2, Q3, Q4, Q5, Q6) dans le circuit onduleur (20), et

un générateur de signal (50, 51, 70, 80) configuré pour générer des signaux ayant des formes d'onde correspondant à des signaux de tensions de commande de phases U, V, W (Vu*, Vv*, Vw*) sur la base d'informations d'un angle (θ), de la tension de commande d'axe d (Vd*), et de la tension de commande d'axe q (Vq*) ;

les éléments de commutation (Q1, Q2, Q3, Q4, Q5, Q6) configurant une branche supérieure et une branche inférieure de chacune de phases U, V, W ;

l'unité de comparaison (52, 71, 81) étant configurée pour comparer les signaux ayant les formes d'onde correspondant aux signaux des tensions de commande de phases U, V, W (Vu*, Vv*, Vw*) générés par le générateur de signal (50, 51, 70, 80) avec des signaux de la tension de modulation (M) générée par la deuxième unité de calcul (55, 73, 83, 90, 91) à chaque période de commande et générer, sur la base de la comparaison, les signaux délivrés pour faire fonctionner les éléments de commutation (Q1, Q3, Q5) de la branche supérieure et les éléments de commutation (Q2, Q4, Q6) de la branche inférieure dans le circuit onduleur (20) ;

le générateur de signal (70) étant configuré pour générer les signaux des phases U, V, W ayant chacun une forme d'onde d'une onde triangulaire qui varie entre -1 et +1 et dont une amplitude est de 1 sur la base des informations de l'angle (θ), de la tension de commande d'axe d (Vd*) et de la tension de commande d'axe q (Vq*), la deuxième unité de calcul (55) étant configurée pour générer des signaux d'une tension de modulation positive (+M) dans un intervalle de 0 à 1 et d'une tension de modulation négative (-M) dans un intervalle de -1 à 0,

l'unité de comparaison (71) étant configurée pour comparer les signaux de l'onde triangulaire générée avec les signaux de la tension de modulation positive (+M) dans l'intervalle de 0 à 1 et de la tension de modulation négative (-M) dans l'intervalle de -1 à 0 et pour délivrer les signaux ayant les motifs d'impulsion pour faire fonctionner les éléments de commutation (Q1, Q3, Q5) de la branche supérieure et indiquant un résultat de comparaison de grandeur des signaux de l'onde triangulaire générée et de la tension de modulation positive (+M) dans l'intervalle de 0 à +1, et les signaux des motifs d'impulsion pour faire fonctionner les éléments de commutation (Q2, Q4, Q6) de la branche inférieure et indiquant un résultat de comparaison de grandeur des signaux de l'onde triangulaire générée et de la tension de modulation négative (-M) dans l'intervalle de -1 à 0, **caractérisé en ce que**

chacun des éléments de commutation (Q1, Q3, Q5) de la branche supérieure est configuré pour être fermé si l'onde respective des ondes triangulaires est supérieure à la tension de modulation positive (+M) dans l'intervalle de 0 à 1 et pour être ouvert si l'onde respective des ondes triangulaires est inférieure à la tension de modulation positive (+M) ; et

chacun des éléments de commutation (Q2, Q4, Q6) de la branche inférieure est configuré pour être fermé si l'onde respective des ondes triangulaires est inférieure à la tension de modulation négative (-M) dans l'intervalle de -1 à 0 et pour être ouvert si l'onde respective des ondes triangulaires est supérieure à la tension de modulation négative (-M).

3. Dispositif onduleur (10) comprenant :

un circuit onduleur (20) qui présente des éléments de commutation (Q1, Q2, Q3, Q4, Q5, Q6) connectés entre un bus négatif (Ln) et un bus positif (Lp), le circuit onduleur (20) étant configuré pour convertir une tension CC (Vdc) en une tension CA par opération de commutation des éléments de commutation (Q1, Q2, Q3, Q4, Q5, Q6) et pour fournir la tension CA à un moteur (60) ;

une première unité de calcul (53, 72, 82) configurée pour recevoir des signaux d'une tension de commande d'axe d (Vd*) et d'une tension de commande d'axe q (Vq*), et calculer une tension de ligne efficace (Vline-rms) ;

une deuxième unité de calcul (55, 73, 83, 90, 91) configurée pour recevoir la tension de ligne efficace (Vline-rms) calculée par la première unité de calcul (53, 72, 82) et générer une tension de modulation (M) à chaque période de commande ; et

une unité de comparaison (52, 71, 81) configurée pour délivrer des signaux ayant des motifs d'impulsion pour faire fonctionner les éléments de commutation (Q1, Q2, Q3, Q4, Q5, Q6) dans le circuit onduleur (20), et

un générateur de signal (50, 51, 70, 80) configuré pour générer des signaux ayant des formes d'onde correspondant à des signaux de tensions de commande de phases U, V, W (Vu*, Vv*, Vw*) sur la base d'informations d'un angle (θ), de la tension de commande d'axe d (Vd*), et de la tension de commande d'axe q (Vq*) ;

les éléments de commutation (Q1, Q2, Q3, Q4, Q5, Q6) configurant une branche supérieure et une branche inférieure de chacune de phases U, V, W ;

l'unité de comparaison (52, 71, 81) étant configurée pour comparer les signaux ayant les formes d'onde correspondant aux signaux des tensions de commande de phases U, V, W (Vu*, Vv*, Vw*) générés par le générateur de signal (50, 51, 70, 80) avec des signaux de la tension de modulation (M) générée par la deuxième unité de calcul (55, 73, 83, 90, 91) à chaque période de commande et générer, sur la base de la comparaison, les signaux délivrés pour faire fonctionner les éléments de commutation (Q1, Q3, Q5) de la branche supérieure et les éléments de commutation (Q2, Q4, Q6) de la branche inférieure dans le circuit onduleur (20) ;

le générateur de signal (80) étant configuré pour générer les signaux des phases U, V, W ayant chacun une forme d'onde d'une onde sinusoïdale dont une amplitude est de 1 sur la base des informations de l'angle (θ), de la tension de commande d'axe d (Vd*) et de la tension de commande d'axe q (Vq*),

la deuxième unité de calcul (55) étant configurée pour générer des signaux d'une tension de modulation positive (+M) dans un intervalle de 0 à 1 et d'une tension de modulation négative (-M) dans un intervalle de -1 à 0,

l'unité de comparaison (81) étant configurée pour comparer les signaux de l'onde sinusoïdale générée avec les signaux de la tension de modulation positive (+M) dans l'intervalle de 0 à 1 et de la tension de modulation négative (-M) dans l'intervalle de -1 à 0 et pour délivrer les signaux ayant les motifs d'impulsion pour faire fonctionner les éléments de commutation (Q1, Q3, Q5) de la branche supérieure et indiquant un résultat de comparaison de grandeur des signaux de l'onde sinusoïdale générée et de la tension de modulation positive (+M) dans l'intervalle de 0 à +1, et les signaux des motifs d'impulsion pour faire fonctionner les éléments de commutation (Q2, Q4, Q6) de la branche inférieure et indiquant un résultat de comparaison de grandeur des signaux de l'onde sinusoïdale générée et de la tension de modulation négative (-M) dans l'intervalle de -1 à 0,

**caractérisé en ce que**

chacun des éléments de commutation (Q1, Q3, Q5) de la branche supérieure est configuré pour être fermé si l'onde respective des ondes sinusoïdales est supérieure à la tension de modulation positive (+M) dans l'intervalle de 0 à 1 et pour être ouvert si l'onde respective des ondes sinusoïdales est inférieure à la tension de modulation positive (+M) ; et

chacun des éléments de commutation (Q2, Q4, Q6) de la branche inférieure est configuré pour être fermé si l'onde respective des ondes sinusoïdales est inférieure à la tension de modulation négative (-M) dans l'intervalle de -1 à 0 et pour être ouvert si l'onde respective des ondes sinusoïdales est supérieure à la tension de modulation négative (-M).

4. Dispositif onduleur (10) selon l'une quelconque des revendications 1 à 3, **caractérisé en ce que** la deuxième unité de calcul (90, 91) présente :

une unité de calcul de tension de ligne efficace/tension de phase efficace (90a, 91a) configurée pour calculer la tension de phase efficace (Vphase-rms) à partir de la tension de ligne efficace (Vline-rms) ; et

une unité de calcul de tension de modulation (90b, 91b) configurée pour calculer la tension de modulation M à partir de la tension de phase efficace (Vphase-rms) calculée par l'unité de calcul de tension de ligne efficace/tension de phase efficace (90a, 90b) et de la tension CC (Vdc) en utilisant une expression mathématique.

# FIG. 1

# FIG. 2

# FIG. 3

M

L1

effective line voltage
Vline_rms

# FIG. 4

(a)

Vu** (Vx**, Vw**)

1
+M

0                                          t

-M
-1

(b)

Q1
(Q3, Q5)

ON

OFF

(c)

Q2
(Q4, Q6)

ON

OFF

# FIG. 5

when the load is constant

(a)

(b)

U-phase upper (Q1)  U-phase lower (Q2)

$V_u**$

+M

−M

ON

ON

OFF

OFF

W2   W1   W2   W1

t

FIG. 6

when the load is fluctuated

(a)

+M

Vu**

−M

(b)

U-phase upper (Q1)

U-phase lower (Q2)

ON

OFF

ON

OFF

P1

P2

W10  W11  W12  W13  W20  W21  W22

t

# FIG. 7

EP 3 745 580 B1

# FIG. 8

# FIG. 9

FIG. 10

# FIG. 11

EP 3 745 580 B1

# FIG. 12

U-phase voltage [V]

$(1-M) \cdot \pi$

pick up a half cycle

# FIG. 13

(a)

phase voltage (u)

$\dfrac{Vdc}{2}$

(b)

line voltage

$2/3\pi$

Vdc

−Vdc

$\pi$

# FIG. 14

80 — sine wave generator

39

sine waves of three phases

81 — comparator
+M
−M

82 — effective line voltage calc. unit

91
91a — effective line voltage/effective phase voltage calc. unit
91b — modulation voltage computing unit

$$M = \sin\left\{ \frac{\pi}{2} - \frac{9\pi}{4}\left(\frac{Vphase\_rms}{Vdc}\right)^2 \right\}$$

$Vline\_rms \left( = \sqrt{Vd*^2 + Vq*^2} \right)$

$Vphase\_rms \left( = Vline\_rms \times \dfrac{1}{\sqrt{3}} \right)$

θ

Vd*

Vq*

# FIG. 15

$$\theta 1 = \sin^{-1}(M)$$

U-phase
voltage
[V]

# FIG. 16

(a)                                                    (b)

line voltage

large
command
voltage

small
command
voltage

pulse pattern
(switching pattern)

upper arm ON

lower arm ON

# FIG. 17

# FIG. 18

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012095412 A

- US 3363199 A

**Non-patent literature cited in the description**

- **JUNG SUNGHO et al.** Low voltage modulation method in six-step operation of three phase inverter. *2015 9TH INTERNATIONAL CONFERENCE ON POWER ELECTRONICS AND ECCE ASIA (ICPE-ECCE ASIA), KOREAN INSTITUTE OF POWER ELECTRONICS,* 01 June 2015, 605-610
- Width-modulated square-wave pulses for ultrasound applications. *IEEE TRANSACTIONS ON ULTRASONICS, FERROELECTRICS AND FREQUENCY CONTROL, IEEE, US,* 01 November 2013, vol. 60 (11), 2244-2256

- **ANEESH KUMAR A S et al.** Control Strategy to Naturally Balance Hybrid Converter for Variable-Speed Medium-Voltage Drive Applications. *IEEE TRANSACTIONS ON INDUSTRIAL ELECTRONICS, IEEE SERVICE CENTER, PISCATAWAY, NJ, USA,* 01 February 2015, vol. 62 (2), 866-876